(19) Europäisches Patentamt
European Patent Office
Office européen des brevets

(11) **EP 2 931 481 B1**

(12) **EUROPEAN PATENT SPECIFICATION**

(45) Date of publication and mention
of the grant of the patent:
**05.10.2016 Bulletin 2016/40**

(51) Int Cl.:
**B25D 17/24** *(2006.01)* **F16F 7/116** *(2006.01)*

(21) Application number: **13811461.6**

(22) Date of filing: **17.12.2013**

(86) International application number:
**PCT/EP2013/076996**

(87) International publication number:
**WO 2014/095936 (26.06.2014 Gazette 2014/26)**

(54) **IMPACT MACHINE**

SCHLAGMASCHINE

MACHINE À PERCUSSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2012 EP 12197489**

(43) Date of publication of application:
**21.10.2015 Bulletin 2015/43**

(73) Proprietor: **Swerea IVF AB
431 22 Mölndal (SE)**

(72) Inventor: **LINDELL, Hans
S-426 58 Västra Frölunda (SE)**

(74) Representative: **Awapatent AB
P.O. Box 11394
404 28 Göteborg (SE)**

(56) References cited:
**EP-A1- 1 415 768        EP-A2- 1 736 283
WO-A1-94/02755         WO-A1-2011/072918
DE-A1-102009 046 348   US-A1- 2012 055 689
US-A1- 2012 267 136    US-A1- 2012 279 741**

## Description

<u>Field of the Invention</u>

The present invention relates to the field of impact machines, and more specifically to impact machines according to the preamble of claim 1, and comprising a vibration reduction arrangement.

Such an impact machine is known from US 2012/0279741 A1.

<u>Background and Summary of the Invention</u>

Impact machines are frequently used in quarries, road construction and building construction applications in order to work hard surfaces, such as rock, concrete and pavements or softer materials such as asphalt. The invention can be used on machines such as rock drills, breakers, rammers and hammers which all have a similar impact mechanism.

A common design for impact machines comprises hydraulic, pneumatic, combustion engine or electrical actuating means and a moveable impact element transferring a impact force to a work tool attached to the housing. In operation, fatigue in a hard surface may be achieved by applying a continuous impact force from the work tool, such that the hard surface finally breaks. However, parts of the vibrations from the movements of the impact mechanism are transferred to the housing of the impact machine and to a connection point for either a manual handle or to a bracket for a machine attachment. The vibrations may thus result in body injuries if the tool is hand-held and in machine wear if the tool is attached to a machine.

An example of a vibration dampening mechanism for a hand-held machine tool is disclosed in the document US2012/0279741. The vibration damping mechanism comprises a movable counterweight arranged between two identical sets of compression springs. Each set comprises two springs of different lengths arranged in parallel; the longest spring is in constant contact with the counterweight, and the shortest spring is only in contact with the counterweight at high vibration amplitudes.

When the vibration amplitude of the counterweight is increased, the springs that are connected in parallel are both activated, such that the spring constants are added and the spring constant in the vibratory damping mechanism is increased. This shifts the natural frequency of the vibration damping means towards higher frequencies.

The purpose of the short springs arranged at a distance from the counterweight is to prevent striking of the mechanical limit position. Under normal operating conditions, the springs will not be in contact with the counterweight.

The document DE102009046348 discloses another example of a vibration damping mechanism for a hand-held machine tool that comprises a counter acting weight. In order to provide a cost efficient method of producing the vibration damping mechanism, the geometry of a coil spring can be varied such that a central region of the spring has a certain weight that is sufficient to create a counter-acting weight. The central region is provided with a weight by arranging it like a tension spring with a large diameter and with compact windings. Alternatively, an external or internal counterweight can be attached to the central region to achieve a heavier counterweight. The central region is received between two elastic compression springs that are provided with stiff end-portions connected to a housing. However, the arrangement in DE102009046348 does not provide any means for extending the dampened frequencies range of the machine tool.

In view of the above, it is an object of the present invention to provide an improved vibration damping arrangement for an impact machine that is providing a vibration damping effect throughout a wide working frequency range of the machine and that also reduces the risk of sudden disruptions in the vibration damping effect. A further object is to provide a stronger feed-force of the impact machine, such that the weight of the hammering can be reduced. The inventor was recently given the assignment of trying to find a way to reduce the vibrations of the handles in hand held impact machine. As an example of a machine on the market he was given an impact machine, Atlas-Copco, KV434, having an impact energy of about 25 Joules, and a total weight of 12 kg whereof the impact element had a weight of 0.53 kg. The idea behind the vibration reduction arrangement of this machine, resided in making the machine sufficiently heavy such that the amplitude of the vibrations would be reduced due to the weight of the machine. However, still with this heavy weight, the machine generated very high vibrations in the range around region of 20 m/s$^2$, hand arm weighted acceleration.

In the beginning of the project, the inventor made an analysis of possible ways to lowering the vibrations in the handles, and came up with the following ideas:

(a) providing vibration isolation means (such as springs or shock absorbers) e.g. between the impact mechanism and the handles,
(b) using a actively controlled counterweight, which applies the substantially same force to the housing as the hammering element but in the opposite direction, or
(c) using a tuned vibration absorber.

Knowing that tuned vibration absorbers, such as the ones described by J. P. Den Hartog in "Mechanical Vibratons", 1985, or "Shock and Vibraton Handbook"; 1987, where a counterweight is coupled to an active weight by means of a spring, <u>would only work within a very limited frequency interval;</u> the inventor quickly gave up that idea. These types of vibration dampers are also referred to as "vibration reduction methods for narrow frequency ranges" in the following text, and are normally applied to devices having a very limited variation in working frequency, such as air plane engines or marine engines.

The reason for the inventor to abandon the idea of using vibration reduction methods for narrow frequency rages, was that the hand-held impact machines of the type the inventor was working with have a working frequency which varies through a wide frequency range, they normally presented a variation of 20-30% in working frequency and sometimes as high as 50%. The working frequency may vary due to e.g. instability in the control of the element e.g. due to instability in the compressed air supply to the machine, due to the operator holding the machine in varying angles in relation to the surface which is to be cut, due to a variation in the force by which the operator presses the machine against the surface, due to a varying surface hardness at different locations in the element which is to be cut, etc.

However, as a comparative example the inventor wanted to give an illustration of how badly the "vibration reduction methods for narrow frequency rages" worked for impact machines. But when he was about to connect a counterweight to the housing of the impact machine by means of one spring at each end of the counterweight he realized that he did not have sufficiently strong springs at home to get the right working frequency. Not letting this stop him, he simply used the strongest once he had at hand.

As predicted, the dampening arrangement did not work at all when he turned the machine on. The machine just bounced around, being extremely difficult to control. Try to picture his surprise when, after a while, the bouncing suddenly stopped and there were hardly any vibrations in the handles at all. The inventor turned the machine off and then on again, and still the vibrations were almost eliminated. There was no reasonable explanation to this.

When he later disassembled the machine, he could see nothing unordinary except that the force of the counterweight had compressed the springs, such that there were gaps between the counterweight and the springs. Hence, he could see no other explanation, besides that it was the gap between the spring and the counterweight that had balanced the system. Encouraged by this, he started to simulate the system to see if his conclusions could be correct - and it turned out that they were.

After the inventor had analyzed his findings, he has come to the conclusion that the surprising vibration reducing effect may not only be achieved by arranging a gap between the counterweight and the springs, but also by means of alternative measures as will be described below.

The present invention is described in the independent claim, and advantageous embodiments of the present invention are defined in the dependent claims.

According to a first aspect of the present invention, there is provided an impact machine comprising:

- a housing,
- a hammering element arranged inside said housing, said hammering element is displaceable between a first hammering element position and a second hammering element position,
- an impact receiving element attached to said housing,
- actuating means arranged to cause said hammering element to perform a hammering operation on said impact receiving element,
- a vibration reduction arrangement attached to said housing, which comprises:

  - a counterweight being displaceable in a first axial direction between a first counterweight position and a second counterweight position in response to the hammering action of said hammering element,
  - at least one motion reversing mechanism each of said motion reversion mechanism comprising at least one spring-action arrangement, each of said at least one spring-action arrangements being arranged to reverse the direction of motion of said counterweight, wherein

- said counterweight is arrangeable at a position located between said first counterweight position and said second counterweight position from which position said counterweight is moveable a first distance extending in said first axial direction without actuating said at least one spring-action arrangement or from which position said counterweight is moveable a first distance extending in said first axial direction leaving said at least one spring-action arrangement unactuated

or wherein

- said vibration reduction arrangement further comprises a first end surface, said at least one spring action arrangement being arranged between said counterweight and said first end surface, said at least one spring action arrangement comprising a first spring-action member attached to said counterweight, and a second spring-action member arranged in series with said first spring-action member in said first axial direction and being attached to said first end surface and said first spring action member; said first spring-action member having a first spring characteristics comprising a first spring coefficient ($k_1$) within the interval $-k_{trad} \leq k_1 \leq k_{trad}/2$ and $k_1 \neq 0$, and the second spring-action member having a second spring characteristics comprising a second spring coefficient ($k_2$) within the interval $k_{trad}/5 \leq k_2 \leq 30*k_{trad}$, and $k_{trad}$ is determined from the following formula

$$F_{res} = \frac{1}{2\pi}\sqrt{\frac{k_{trad}}{m}}$$

$F_{res}$ being the resonance frequency of the impact machine at rated power, and m the weight of the counterweight.

In more detail, said first spring coefficient ($k_1$) is arranged within the interval $-k_{trad} \leq k_1 \leq k_{trad}/2$, or $-k_{trad}/4 \leq k_1 \leq k_{trad}/4$, or $-k_{trad}/6 \leq k_1 \leq k_{trad}/6$. In all embodiments without gap $k_1 \neq 0$, or $k_1 \leq 0.001 \ast k_{trad}$ or $k_1 \leq 0.01\ast k_{trad}$; or $k_1 \geq -0.001 \ast k_{trad}$ or $k_1 \geq -0.01 \ast k_{trad}$. $k_1 < 0$ may be achieved by means of e.g. pressurized air or magnectic means as described in more details below.

In essence the inventors have realized that an improved vibration reducing arrangement may be achieved by providing a motion reversing arrangement having a low force zone and a high force zone, wherein the low force zone is activated before the high force zone when the motion of the counterweight is decelerated and reversed. The spring coefficient of the low force zone corresponds to said first spring coefficient ($k_1$) described above, and the spring coefficient of said high force zone preferably is $k_{trad}/5 \leq k_2 \leq 30\ast k_{tra}$ when at least one member of said motion reversing arrangement is prestressed or biased. Alternatively, the spring coefficient of said high force zone is preferably $2\ast k_{trad} \leq k_2 \leq 30\ast k_{trad}$ when said motion reversing arrangement is not prestressed or biased. Furthermore, two motion reversing arrangement may be provided, one on each side of the counterweight, wherein the sum of the lengths the respective low force zones (length of low force zone 1 + of low force zone 2) preferably is at least 30 % or at least 40 % of the distance between said first counter weight position and said second counter weight position. When $k_1 = 0$, said low force zone is a gap, when $k_1 \neq 0$ said low force zone may comprise one or more spring action members having a resulting first spring coefficient $k_1$. Moreover, the motion reversing mechanism may be attached to said counter weight and/or an end surface, or being loose (i.e. not attached to anything) as long as the described low and high force zones are provided. More details may be found below.

The housing may also be referred to as a hammer element housing, which is the housing in which the hammering element is arranged, and also the housing to which the vibration reduction arrangement is attached.

According to one example, the first motion reversing mechanism may comprise a non-linear spring with a weaker section and a stiffer section, wherein the weaker section is in contact with the counterweight. Examples of non-linear springs may comprise coil springs with a diameter that changes as a function of the length of the non-linear spring, which may e.g. result in a conical spring shape.

The present invention provides the advantage of enabling a substantial decrease in the weight of an impact machine, lower vibration amplitude and an extended frequency range of low vibration amplitude. The force from the counterweight on the housing also creates a feed force that improves the efficiency of the machine.

The counterweight moves in a counter-phased movement in relation to the direction of a hammering element, where the travel distance of the counterweight is restricted to a **maximum counterweight displacement distance** between the **first counterweight position** and the **second counterweight position** measured when the machine is operated at rated power. A movement beyond these points is thus not possible when the machine is operated at rated power. Hence, depending on e.g. the impact forces, the travel distance of the counterweight may be equal to the maximum counterweight displacement distance, or shorter.

The motion reversing mechanisms may be limited in their axial movement by **end surfaces,** which define fixed surfaces inside the vibration reduction arrangement. Furthermore, they may serve as abutment surface or attachment surfaces for the motion reversing mechanisms. The vibration reduction arrangement may comprise an end surface on each side of the counterweight.

In relation to this invention, the term **first spring-action arrangement** includes all spring-action members that take part in the reversing of the direction of motion of said counterweight, and which spring-action members are arranged, between a contact surface of the counterweight and a first end-surface.

Further, in relation to this invention, the term **second spring-action arrangement** includes all spring-action members that take part in the reversing of the direction of motion of the counterweight, and which are arranged between said counterweight and said second end surface.

In relation to this invention, the term **discontinuous spring-action** force implies a discontinuous change in the force acting upon the counterweight over the maximum counterweight displacement distance, between the first counterweight position and the second counterweight position. According to the present invention, a discontinuous spring-action force may be provided by a combination of spring-action members, with different spring coefficients, e.g. first connected to each other in series and then in connection with the counterweight. The spring-action member applies a force on a contact surface of the counterweight. Alternatively, a discrete combination of a spring-action member arranged at a first distance from (i.e. not physically attached to) the counterweight may provide for the discontinuous spring-action force. In the latter example, there is no applied spring-action force on the counterweight throughout the first distance.

When e.g. one non-linear spring about the counterweight on each end this may be referred to an non-linear spring-action. A non-linear spring may also be referred to as an unlinear spring.

In relation to the present invention, the length of the intermediate distance is determined when the impact machine, as well as the motion reversing mechanism(s), as well as the spring-action member(s) are **at rest,** i.e. the spring-action member(s) is/are neither compressed nor extended, i.e. the spring-action members are **unactuated.** In the case of a **biased or prestressed** spring-action member, the definition of unactuated implies that the spring-action member is only being subject to the inherent biasing force.

Normally, the intermediate distance is most easily determined when the vibration reduction arrangement is positioned with the counterweight's travel direction coinciding with the horizontal plane. Moreover, provided that the spring-action members acting upon the counterweight are at rest, **the first distance** which hereinafter is also referred to as **the gap or the intermediate distance,** is defined as a distance between the first and the second end-surface, through which distance the counterweight is freely moveable without actuating the spring-action members. In other words, the counterweight is freely moveable and the spring-action members are left unactuated. In yet other words, the counterweight is freely moveable while all the spring-action members are at rest or unactuated.

A way of determining the length of the gap in the vibration reduction arrangement is to, in the axial direction between the first and the second counterweight positions, measuring:

the distance between the first and second end surfaces,
the unactuated axial lengths of the spring-action members, and
the axial length of the counterweight.

The length of the gap is calculated as the difference between the distance between the first and second end surfaces, subtracted by the length of the counterweight and the axial lengths of the unactuated spring-action members. When there are spring-action members arranged in parallel, the unactuated length is defined by the distal ends of the longest spring-action member. When there are spring-action members arranged in series, the unactuated length is defined by the total axial length of the members in series. Moreover, the axial length of the counterweight is defined by the counterweight contact surfaces which are adapted to be in contact with the contact surfaces of the spring-action members.

The term **first axial direction** is the axial travel direction of the counterweight. The direction is parallel with the axial extensions of the spring action members.

In relation to this invention the term **contact surface** of a spring-action-member refers to the surface of the spring-action member, which is in contact with the counterweight when the spring-action member is being compressed.

In a similar way, the term **contact surface** of a counterweight refers to the surface of the counterweight, which is in contact with the spring-action member as the latter is being compressed.

The purpose of the spring-action member is to reverse the motion of the counterweight. Within the scope of the present invention, there are numerous ways of selecting and designing a **spring-action member,** whereby the invention should not be limited to any particular type. However, depending on the type of spring-action member, different parameters/coefficients may be used to specify the motion reversing capabilities of the spring-action member. In particular, the expression **spring characteristics** should be interpreted in a wide sense. Some embodiments of the spring-action member present a linear elasticity and may therefore be characterized in terms of a linear spring coefficient k according to *Hook's law.* Other embodiments of the spring-action member may include materials which present a spring characteristics corresponding to an non-linear spring coefficient. Still other embodiments of the spring-action member may include materials which present a spring characteristics corresponding to a combination of a spring coefficient k and a dampening coefficient c, such as rubber, solid or foamed polyurethane, etc. (The list in non-exhaustive)

Hence, spring-action members may include materials which present a non-linear elasticity, like for instance rubber, steel material, non-linear springs or air cushions. Further, a spring-action member hereby refers to any type of member, which is capable of providing a motion reversing action on the counterweight. In addition, the spring-action member may have various geometric shapes, like a coil spring, rubber ball or a surface, such as a plate.

The advantages include that the vibrations from the impact machine are dampened for a large working frequency range and the absence of a sudden vibration increase enables the vibration reduction arrangement to exclude a safety zone; as well as that many different elements may be applied, giving rise to a vast design freedom.

According to one embodiment, wherein said counterweight is arrangeable at a position located between said first counterweight position and said second counterweight position from which position said counterweight is moveable a first distance extending in said first axial direction without actuating said at least one spring-action arrangement, and said at least one spring action arrangement is arranged inside said counterweight, and said vibration reduction arrangement further comprises:

- a first end surface arranged adjacent to said first counterweight position and
- a second end surface arranged adjacent to said second counterweight position;

said first end surface is arranged to receive said at least one spring action arrangement when in motion towards said first counterweight position; and said second end surface is arranged to receive said at least one spring action arrangement when in motion towards said second counterweight position. Said at least one spring action arrangement may comprise one or more first spring action members which are prestressed and having a resulting spring coefficient within the interval $k_{trad}/5 \leq k1 \leq 30^* k_{trad}$. In case the spring action member(s) of the spring action arrangement are not prestressed, they may have a resulting spring coefficient within the interval $2^*k_{trad} \leq k_1 \leq 30^* k_{trad}$.

According to one embodiment there is one motion reversing mechanism on each side of the counterweight. According to one example, said counterweight is arrangeable at a position located between said first counterweight position and said second counterweight position from which position said counterweight is moveable a first distance extending in said first axial direction without actuating said at least one spring-action arrangement, and wherein said vibration reduction arrangement further comprises:

- a first end surface arranged adjacent to said first counterweight position, and
- a second end surface arranged adjacent to said second counterweight position; and

said at least one motion reversing mechanism comprises a first motion reversing mechanism and a second motion reversing mechanism, and the at least one spring action arrangement of said first motion reversing mechanism is arranged between said counterweight and said first end surface,

and the at least one spring action arrangement of said second motion reversing mechanism is arranged between said counterweight and said second end surface.

According to one example, said first spring action arrangement is attached to said first end surface, and said first spring action arrangement is arranged to receive said counterweight when in motion towards said first counterweight position.

According to one example, said second spring action arrangement is attached to said second end surface, and said first spring action arrangement is arranged to receive said counterweight when in motion towards said first counterweight position.

According to one example, said first spring action arrangement is attached to said counterweight, and said first end surface is arranged to receive said first spring arrangement when said counterweight is in motion towards said first counterweight position.

According to one example, said second spring action arrangement is attached to said counterweight, and said second end surface is arranged to receive said second spring arrangement when said counterweight is in motion towards said first counterweight position.

According to one example, said first spring action arrangement is arrangeable at a position located between counterweight and said first end surface from which position said first spring arrangement is moveable a first distance extending in said first axial direction without actuating said first spring-action arrangement.

According to one example, said second spring action arrangement is arrangeable at a position located between counterweight and said second end surface from which position said second spring arrangement is moveable a first distance extending in said first axial direction without actuating said second spring-action arrangement.

According to one example, wherein said first spring action arrangement comprises a first spring action member, which first spring action member is biased, **and/or** wherein said second spring action arrangement comprises a second spring action member, which second spring action member is biased.

According to one example, wherein said first spring-action arrangement have spring action members arranged in series or in parallel in said first axial direction; a first spring-action member having a first spring coefficient within the interval $- k_{trad} \leq k_1 \leq k_{trad}/2$ and $k_1 \neq 0$, the second spring-action member having a second spring coefficient within the interval $2^*k_{trad} \leq k_2 \leq 30^* k_{trad}$, the second spring member is not prestressed. The first and/or the second spring action member may also comprise a set of spring actions members, said set of spring action members having a resulting spring coefficient according to the above $k_1$ or $k_2$, respectively; and none of the second spring action members are prestressed.

Alternatively, said first spring-action arrangement have spring action members arranged in series or in parallel in said first axial direction; a first spring-action member have a first spring coefficient within the interval $- k_{trad} \leq k_1 \leq k_{trad}/2$ and $k_1 \neq 0$, the second spring-action member have a second spring coefficient within the interval $k_{trad}/5 \leq k_2 \leq 30^* k_{trad}$, the second spring member is prestressed. The first and/or the second spring action member may also comprise a set of spring actions members, said set of spring action members having a resulting spring coefficient according to the above $k_1$ or $k_2$, respectively; and at least one spring action member, belonging to said set of spring action members having a resulting spring coefficient $k_2$, is prestressed.

According to an exemplary embodiment, the machine further comprising a second motion reversing mechanism located at the second counterweight position, and arranged to receive the moving counterweight as well as reversing the direction of motion of the counterweight,

- wherein the second motion reversing mechanism comprises
- a first spring-action member;
  or
- a first spring-action member and a second spring-action member arranged in series such that one of the spring-action members is attached to the counterweight; the first spring-action member having a first spring coefficient and the second spring-action member having a second spring coefficient, which is different from the first spring coefficient.

Alternatively, the second motion reversing mechanism may comprise a non-linear spring with a weaker section and a stiffer section, wherein the weaker section is in contact with the counterweight. Examples of non-linear springs may comprise coil springs with a diameter that changes as a function of the length of the non-linear spring, which may e.g. result in a conical spring shape.

According to an exemplary embodiment, the gap or the first distance is at least 20%, or at least 40%, or at least 60% or at least 70% or at least 80% or at least 90% of the maximum counterweight displacement distance. Additionally, or alternatively, the gap is at the most 90% or at the most 95 % at the most 97% at the most 99% of maximum counterweight displacement distance. In other words, the gap introduces a distance where the counterweight is not subjected to any spring-action force. For example, the system may be designed with spring-action members, such as air cushions.

According to an exemplary embodiment, which features at least two spring-action members connected in series, wherein the first spring-action member being arranged closest to the counterweight, the first spring coefficient is lower than the second spring coefficient, and wherein the first spring coefficient applies to a distance corresponding to at least 10% or at least 15% or at least 20% or at least 25% of the maximum counterweight displacement distance and the second spring coefficient applies to the remaining distance within the maximum counterweight displacement distance. Furthermore, the unactuated length of the first action member may correspond to at least 20%, or at least 40%, or at least 60% or at least 70% or at least 80% or at least 90% of the maximum counterweight displacement distance.

According to an exemplary embodiment, the first spring coefficient is at least 50%, or at least 60 % or at least 70 % lower than the second spring coefficient.

According to an exemplary embodiment, the impact machine further comprises hammer element guiding means arranged to cause the hammering element to move in a linear direction between the first hammering element position and the second hammering element position, wherein the guiding means comprises an elongated cavity wherein said hammering element is arranged.

According to an exemplary embodiment, the impact machine further comprises counterweight guiding means arranged to cause the counterweight to move in a linear direction between the first counterweight position and the second counterweight position. With guiding means, the movements of the counterweight are controlled so that the travel path is always the same.

According to an exemplary embodiment, the impact receiving element is a work tool, such as a chisel, drill bit or like.

According to an exemplary embodiment, the impact machine is handheld. An efficient vibration reduction arrangement according to the invention is particularly useful for preventing a vibration transfer to a person holding the impact machine. Another advantage is that the vibrations normally only increase gradually as the working frequency of the machine tool shifts out from the damping range, which enables a user to feel and anticipate the rise in vibration, such that body injuries may be prevented. Moreover, with the vibration reduction arrangement according to this invention, it is possible to design the impact machine such that it always stays in a working frequency arrangement with low vibration amplitude of housing between 0.4 and 1 mm peak.

According to an exemplary embodiment, the impact machine is not handheld, but attached to a machine. Examples of such machines may be construction machinery, such as excavators, backhoe loaders or like. Advantages include that less vibrations are transferred to the machine and to the operator, which significantly improves the operating comfort for and reduces the mechanical wear on the machine.

According to an exemplary embodiment, the weight of the impact element corresponds to 20% to 300% of a weight of the counterweight. The purpose of the counterweight arrangement is to counteract the vibrations from the impact element. Depending on the weight and stroke length of the impact element, the counterweight and the travel path between the first counterweight position and the second counterweight position may be adjusted such that the resulting force on the counterweight is equal to the force of the hammering element. Consequently, a counterweight with a weight of less than 100% of the hammering element's weight gives the advantage of a possible reduction in the overall weight in the impact machine. On the contrary, a counterweight with a weight of more than 100% of the hammering element's weight gives a better flexibility to mount the vibration reduction arrangement in view of the geometric constraints of the impact machine, such as the length of the impact machine's housing.

According to an exemplary embodiment, the counterweight comprises one or more elements, evenly distributed with respect to the housing of the hammering element. By distributing the counterweight around the center movement axis of the hammering element, a higher stability is achieved to the impact machine, which also more efficiently absorbs the vibrations distributed in its housing.

According to an exemplary embodiment, the counterweight is arranged around the housing of the hammering element. In this way, the counterweight is completely distributed around the tool. By designing the counterweight as one unitary part, whereby the impact machine may be better balanced. Another advantage is that the frequency of a single unit is easier to control.

According to an exemplary embodiment, a boost of pressurized air is directed to the counterweight through the outlet hole from the impact element. The counterweight is designed in such a way that it directs the air in a direction that it creates a axial force on the counterweight, bringing it into counter phase of the hammering element in a short time and thereby reducing the vibrations. An advantage is that the vibration damping arrangement is rapidly brought into the correct working frequency and that the vibration reduction effect is achieved faster.

According to an exemplary embodiment, the vibration reduction arrangement may be enclosed in a housing. An enclosed vibration reduction arrangement may reduce the occurrence of foreign particles (dust, dirt etc.) enter the system.

According to an exemplary embodiment, the housing of the vibration reduction arrangement is a closed housing, which contains a fluid. The fluid can be air, gas a liquid. The fluid may be introduced to either reduce friction or to create a damping effect.

Brief description of the drawings

These and other aspects will now be described in more detail with reference to the appended drawings, in which exemplary embodiments of the present invention are shown, wherein:

Figs. 1 a and 1 b are diagrams illustrating the correlation between working frequency and vibration amplitude for simulated vibration arrangements,
Figs. 2a and 2b are schematic views of exemplary impact machine embodiments in perspective and in cross section respectively,
Figs. 3a and 3b are schematic cross-sectional views of exemplary impact machine embodiments,
Figs. 4a-4k are schematic perspective views of other exemplary embodiments of the present invention,
Figs. 5a-5c are schematic perspective views of exemplary embodiments including biased spring-action members,
Figs. 6 is a schematic perspective and cross-sectional views, respectively, of an impact machine according to a further exemplary embodiment,
Fig. 7 is a cross-sectional schematic view of a impact machine, in which geometry of the vibration reduction arrangement is illustrated in detail,
Fig. 8 is a diagram describing examples of the spring-action characteristics as a function of the counterweight displacement,
Figs. 9a to 9c are schematic perspective views of exemplary mounting positions for the vibration reduction arrangement.

Detailed description

It should be noted that the illustrated embodiments by no means limits the scope of the present invention. In particular, the motion-reversing mechanism is described and illustrated as a coil spring. However, coil springs should only be seen as a representation of a possible spring-action member. In relation to this invention, spring-action members should include any member, which is capable of elastically reversing the moving counterweight in a vibration reduction arrangement. Like features are denoted with the same reference number.

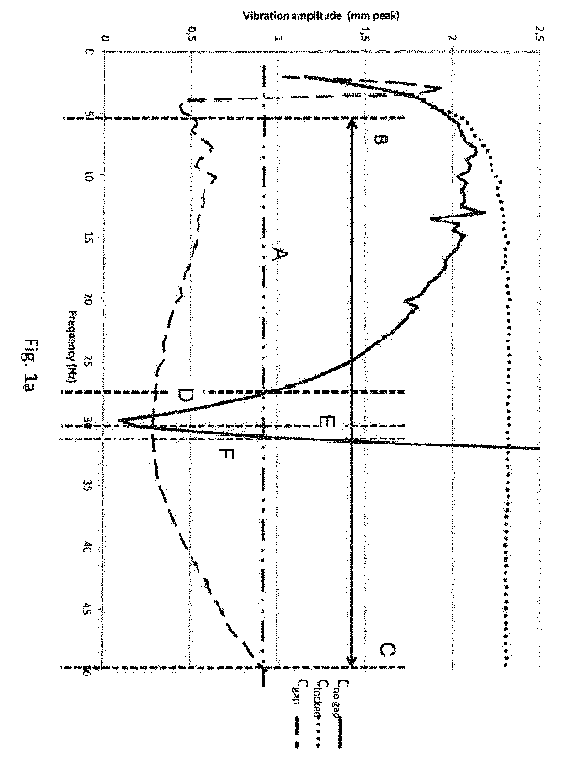

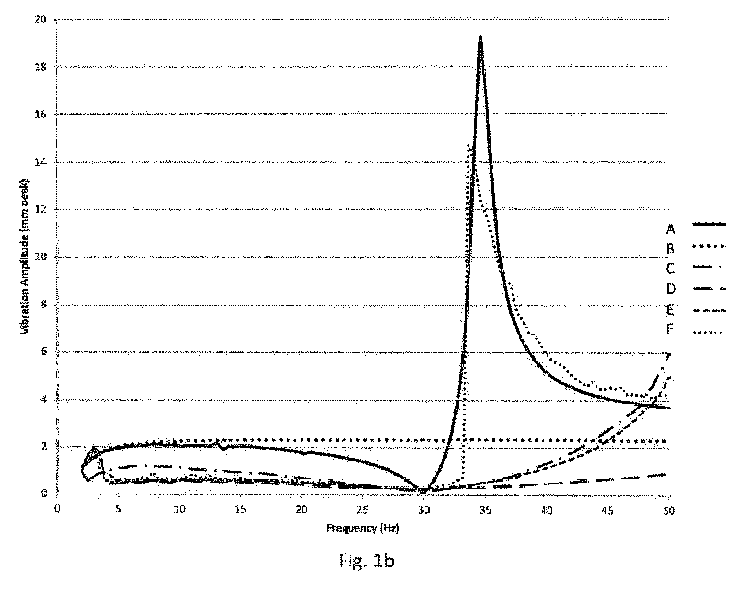

Figs. 1 a and 1 b show diagrams with a representative image of the correlation between a working frequency f for an impact machine and the amplitude of transferred vibrations $V_a$ to a handle or an attachment point to the impact machine. Notably, the diagrams in figs. 1 a and 1 b illustrate examples of variations in the vibration reduction effect for a machine with several different vibration reduction arrangements. The graphs were generated in the multi-body simulation program RecurDyn®, by Functionbay®. All simulations have been further validated in the simulation software Matlab®, by MathWorks®, and also verified by laboratory test with mechanical components.

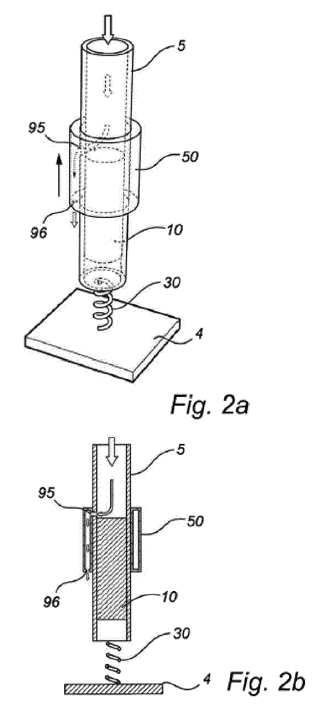

Figs. 2a and 2b show a schematic view of the simulation model in the program RecurDyn® that was designed for the simulations according to figs. 1 a and 1 b. The schematic model comprises a moveable hammering element 10, a counterweight 50, a hammering element housing 5 and an impact receiving element 30 in contact with the ground 4. The counterweight is moveable in a first axial direction x. The impact receiving element is given the function of a spring, as it provides a resilient movement in relation to the surface and simulate the effect of a work tool. The impact receiving element may also be referred to as an implement.

Now referring to fig.1 a. In the simulations, the spring characteristics of the counterweight 50 are applied as forces acting on the housing 5. For an instance in time where the counterweight 50 is at its respective end position, the force acting on the housing 5 is $F_{CW} = kx + c\dot{x}$ from the counterweight, and $F_{HE} = m\ddot{x}$ is the force from the hammering element. The force $F_s$ from the impact receiving element 30 is determined by $F_S = Kx + C\dot{x}$. $F_{HE}$ and $F_{CW}$ are being arranged in the opposite directions.

The following parameters were entered in the program:

Spring coefficient for counterweight 50 set to: k=300N/mm
Damping coefficient counterweight 50 set to: c=0.1 N*s/m
Spring coefficient against surface 4 set to: K=0.5 N/mm
Damping coefficient against surface 4 set to C= 1001 N*s/m
Weight of hammering element housing 5 set to: M=3000 gram
Weight of counterweight 50 set to: m=1000 gram
Weight of hammering element 10 set to: H=300 gram

Amplitude of hammering element 10 set to: s=60 mm peak to peak, sinus-shaped.
Variable simulation parameter: frequency (f) and gap

The distinctive simulation curves according to fig. 1 were achieved by entering the following specific constraints:

$C_{gap}$ : Gap $D_1$ is fixed to 15 mm.
Cno gap: Gap $D_1$ is fixed to 0 mm
$C_{locked:}$ Counterweight 50 is fixedly connected to the housing 5 of the hammering element.

A first simulation $C_{locked}$ illustrates the vibrations of the hammering element housing 5 under condition that the counterweight is locked/immovable in relation to the housing of the hammering element. This graphic may serve as reference to the other two configurations in the diagram, as it illustrates an un-dampened impact machine. As the impact machine is shifted through the operating range of 2 Hz to 50 Hz, the vibration amplitude $V_a$ plateaus just above 2 mm after 10 Hz in this example.

A second simulation $C_{no\ gap,}$ illustrates the vibrations under condition that the counterweight is moveable in relation to the hammering element. The $C_{no\ gap,}$ is a typical illustration of the efficiency from a "narrow range vibration reduction arrangement". As the working frequency of the impact machine is increased, the vibration amplitude $V_a$ gradually decreases. The vibration reduction effect continues, whereby a minimum vibration amplitude $V_a$ equals 0.1 and is achieved at 30 Hz. Notably, by achieving a vibration amplitude below at least 1 mm, this opens up a possibility to design the total machine system which handles keep a vibration amplitude that meets the health and safety standards. For this configuration $C_{no\ gap,}$ the useful frequency range of the impact machine thus lies within the range between the points D to F (27 to 32 Hz), which corresponds to a narrow interval of only 5 Hz. Moreover, a variation of 5 Hz is very a narrow interval in relation the normal/typical variations of impact machines' working frequency. Additionally, due to the steep increase in vibration at point F, where a considerable amplification of the vibration occurs, a safety zone is required, whereby the useful working frequency range is even further reduced to the range between points D to E (27 to 30 Hz), corresponding to an even narrower interval of 3 Hz. Another draw-back with this configuration is that, without safety zone and as the machine shifts out from the useful frequency range, the vibration amplitude drastically changes in such a way that a user of the impact machine would be unprepared to the sudden increase in vibrations from the impact machine.

A third simulation C gap illustrates a vibration reduction effect according to an embodiment of the present invention. The counterweight is moveable in a counter-phased manner in relation to the hammering element and travels through a distance/gap where the counterweight is freely moveable and thus not in contact with any spring-action member. A significant change in the graphic is thus visible, whereby the vibration amplitude is first increasing then transitioning to a significantly lower level than for the two previous examples. Compared to the draw-backs of the configuration $C_{no\ gap}$, the illustrated embodiment of the present invention $C_{gap}$, achieves an efficient vibration reduction effect throughout a substantially larger frequency range between the points B and C (16.5 and 26.5 Hz), when a reduction of 1 mm is required. Another benefit from the embodiment of the present invention is that even if the vibration amplitude increases outside the useful frequency range, the increase is rather moderate such that it may be anticipated by a user of the impact machine, whereby a safety zone is not needed.

Fig 1b illustrates a second set of simulations based on essentially the same impact mechanism parameters as in the example illustrated in fig. 1 a. The goal of the second set of simulations was to see how variations of gap length, spring coefficients and prestressing/biasing would affect the vibration, in order to better optimize the benefits.

For reference, there are two simulation setups A and B which are similar to $C_{no\ gap}$ and $C_{locked}$ in that they respectively illustrate a more traditional setup with no gap and a setup with a locked counterweight. Traditionally, the spring has been designed based on the correlation to the counterweight's resonance frequency given by the equation

$$f_{res} = \frac{1}{2\pi}\sqrt{\frac{k_{trad}}{m}}$$

For setups C and D, a gap of 10 mm for setup C and a gap of 15 mm for setup D have been introduced. Furthermore, the spring coefficient k has been increased compared to the traditional setup so that it is approximately 3 times higher for setup C and almost 10 times higher for setup D in order to give optimum performance at 30 Hz.

For setups E and F pretension loads for the spring action members were added to the simulation. Both setup E and F have a gap of 15 mm, similarly to setup D. Setup E was setup with a prestressed load of 300 N and the spring coefficient was roughly 3 times higher than for setup A. Simulation F was setup with a prestressed load of 400 N and the spring coefficient was roughly 4/5 of the traditional setup used in A. The results from the simulation set show promising results for all four setups C-F. Setup C in this second simulation set lies below 1 mm peak in the frequency range 14 Hz - 37 Hz and is more efficient than setup B all the way up to 44 Hz. Setup D has a very small peak, < 2mm, below 5 Hz, but lies below the 1 mm level up to 60 Hz, giving an effective range from 4 Hz to at least 60 Hz. Setup E has a small peak at 3 Hz similar to setup D and then shows an effective range below the 1 mm limit to 39 Hz. Setup F has a steep increase in amplitude at 34 Hz in a similar manner to the traditional no gap setup A. However, setup F has an effective range almost down to 4 Hz. The reason for the drastically increased frequency stability is due to the fact that increased amplitude of the counterweight gives an increase in the resonance frequency as a result of the strong nonlinearity. This is believed to make the counterweight adjust its amplitude so that the resonance frequency will be optimized for the disturbing frequency. Including safety zones that should still be in the range 5 Hz to 30 Hz. The expression for the resonance frequency for the systems without pretension load and infinite weight of the housing is then given or may be selected by

$$f_{res} = \frac{b}{2D_1 + 2\pi b} \sqrt{\frac{k}{m}}$$

Where b corresponds to the compressed distance of the spring. From the equation it can be seen that when the amplitude increases and b with it, the resonance frequency is increased. Preferably, the gap $D_1$ and spring coefficient k can be chosen so that the resonance frequency is close to the working frequency of the machine where the vibrations needs to be reduced. The compressed distance of the spring b is given by calculating the energy content of the impact weight that excites the system. This energy should be the same that the spring action member absorbs from the counterweight, and b can be calculated from that. This is a good approximation for a well functioning system with low vibration amplitude of the housing.

Setups E and F showed that advantages can be achieved by prestressed loads on the springs. Setup E has the same spring coefficient as used in setup C, but a gap of 15 mm. The vibration peaks are almost 0.5 mm lower for setup E at 14 Hz, where setup C crosses the 1 mm limit.

A prototype machine was constructed to test the concept with tuned weight damper. The prototype was based on a redesigned construction of Atlas Copco KV 434. The tests performed are described in the following section. The prototype was constructed according to one embodiment of the invention and the test parameters during the test were:

Counterweight weight 930 g
Hammering element housing weight 4200 g

The tests were performed with three setups, in one setup the prototype did not have a counterweight, this setup should represent a reference machine and is called only "No counterweight". A second setup had a counterweight which was blocked so that it does not move relative to the prototype's housing. Essentially, the blocked counterweight adds weight to the prototype, which in itself dampens the vibrations. For the third setup the counterweight was free to move in reverse phase to the hammering element. The following settings were implemented for the spring action to the counterweight.

Spring stiffness 100 000 N/m
Gap 15 mm

In order to achieve effective vibration reduction the machine was divided into two functional parts: first a suspended weight that contains the impacting mechanism and a tuned vibration absorber comprising the counterweight, and second a housing with the interface to the operator. Vibration isolation between the suspended weight and the housing is applied in the axial, radial and rotational direction in order to handle the vibrations that still remain after the tuned absorber. Care had to be taken not to compromise with the ability to accurately control the machine. The vibrations on the handles of the machines were measured in a test rig, which yielded the same characteristics as described in ISO 8662-5. A three axis Dytran 3053B2 accelerometer with mechanical filter was used to measure the vibrations on the handles. The handle acceleration is measured in weighted vector sum hand-arm acceleration and the signals were analyzed in Labview. Vibration measurements on the hammering element housing were done with a laser displacement sensor, Contrinex, LAS-5050L, and the counterweight was measured with stroboscopic light and a steel scale. The tuned vibration absorber produced a reduction of 68% from 8.4 to 2.7 m/s2 on the handle. The stability of the operation of the tuned vibration absorber was tested by varying the air pressure to the machine from 3 to 7 Bar as well as varying the feed force from -110 N to 450 N. It was found that the vibration level varied between 2.2 and 3.6 m/s2 on the handle. An analysis of the behavior of the counterweight and how it affects the vibrations of the suspended weight was also carried out. The suspended weight displacement was 1.9 mm peak to peak while the counterweight displacement was 30.4 mm peak to peak. From those results it can be calculated that the generated peak force from the counterweight reached 684 N providing the movement of the weight is sinusoidal. For reference, the suspended weight displacement with the counterweight removed was 6.4 mm peak to peak, and 5.2 mm with the counterweight blocked. The general behavior of the vibration absorber corresponds well to the simulation with respect to a high stability of the vibration reduction over a wide frequency range and varying feed force which is the main issue. The discrepancy is mainly due to the simplified model of the excitation force which is represented as a sinusoidal force in the simulation model.

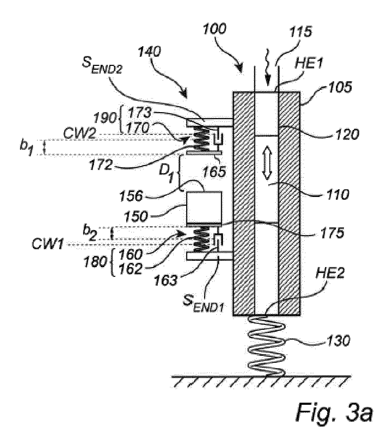

Fig. 3a illustrates a first exemplary embodiment of the present invention. An impact machine 100 comprises a moveable hammering element 110 arranged inside a housing 105. The hammering element 110 is displaceable between a first hammering position HE1 and a second hammering position HE2 by actuating means 115. Examples of actuating means 115 may include a pneumatic, an electric, combustion engine or a hydraulic blow force. An implement 130, such as a work tool is attached to the impact machine 100 in such a way that the blow force from the moveable hammering element 110 is transferred to the implement 130 in the second hammering element position H2. A vibration reduction arrangement 140 is attached to the housing 105. The vibration reduction arrangement 140 comprises a counterweight 150, which is displaceable between a first counterweight position CW1 and a second counterweight position CW2 in response to the hammering action of the hammering element 110. In the first CW1 and the second CW2 counterweight positions, spring-action arrangements 160, 170 are arranged to receive and reverse the motion of the counterweight 150. In the illustrated example, the first spring-action arrangement 160 and a second spring-action arrangement 170 each consist of one spring action member 162, 172. The spring-action arrangements 160, 170 are limited in their axial movement by a first $S_{end1}$ and a second end-surface $S_{end2}$ which are parts of a housing of the vibration reduction arrangement 140. In the illustrated example, the spring-action member 162 is attached to the first end-surface $S_{end1}$ and the second spring-action member 172 is attached to the second end-surface $S_{end2}$. When the vibration reduction arrangement 140 is in use, the spring-action members 162, 172 are compressed with a compression length $b_1$ and $b_2$ respectively. The compression lengths $b_1$ and $b_2$ can be varied depending on the force applied to the spring-action members 162, 172. The maximum compression length is achieved under operating conditions when the counterweight 150 reaches the first CW1 or the second counterweight position CW2. Specifically, normal operating conditions are defined at the rated power and according to applicable ISO standards if any, such as ISO 8662-2 for hand-held portable power tools. In the embodiment illustrated in fig. 3a, provided that the machine is at rest, a spring-action member 160 is arranged with its contact endpoint 165 at a distance $D_1$ from a contact surface 156 of the counterweight 150. In relation to figure 3a, the first counterweight position CW1 and the second counterweight position CW2 define the maximum counterweight displacement distance. In these positions CW1, CW2 the spring-action members 160, 170 are compressed. In addition, damping units 180, 190 with a damping ratio of less than 0.3 are arranged in parallel with each spring-action arrangements 162, 172. This may be a separate reduction component, or a natural reduction effect from the spring-action member itself.

In particular, the damping ratio can be determined by the following relationship:

$$\zeta = \frac{c}{2\sqrt{mk}}.$$

*Wherein:*

*ζ: Damping ratio*
*m:weight*
*c:damping coefficient*
*k: spring coefficient*

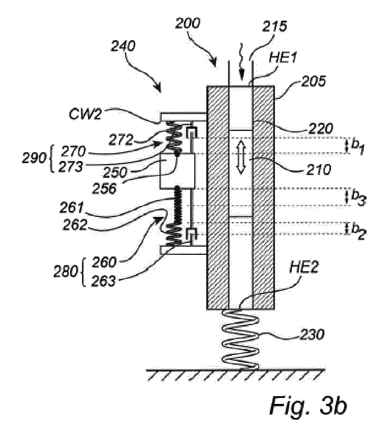

Fig. 3b illustrates another embodiment of a vibration reduction arrangement, which is arranged as the embodiment presented in fig. 3a, except from that the distance $D_1$ has been replaced by a spring-action member 261 with a lower spring coefficient than a second spring-action 262 member. The spring-action member 272is not fixedly connected to the counterweight 250. Had the spring-action member 272 been fixedly connected to the counterweight, the spring characteristics of this spring-action member 272, would reduce the the effect of the weak spring and thus the vibration dampening effect. This combination of spring-action members provides for a discontinuous change in the force acting upon the counterweight 250. In addition, damping units 263, 273 with a damping ratio of less than 0.3 may be arranged in parallel with each spring-action arrangement 260, 270. This may be a separate reduction component, or a natural reduction effect from the spring-action member itself. Alternatively, the spring action member at said second counterweight position may be attached to the counterweight, but not to said second end surface ($S_{end2}$)

Returning to figs. 2a and 2b for reference, a means of initiating the reversed phase movement of the counterweight according to one exemplary embodiment will be described. As the hammering element 10 may be displaced by means of for example pneaumatic actuation or hydraulic actuation there is a fluid flow into the housing 5, preferably flowing into the distal end of the housing relative the implement 30. The housing may be provided with an outlet 95 arranged in the wall of the housing 5 so that as the hammering element 10 is displaced towards the implement 30 by the fluid, the outlet 95 is exposed. The pressurized fluid will be conducted through the outlet 95, which is preferably arranged at a location where it opens into the counterweight 50 at least when it is in its neutral position. According to this exemplary embodiment the counterweight is arranged with a chamber conducting the pressurized fluid to a nozzle 96 which is preferably arranged at the proximal end of the counterweight, relative to the implement. The pressurized fluid will bring the counterweight into an initiated counter-phased movement by a boost of fluid through the nozzle 96. While a flow arrangement and boost according to this exemplary embodiment is not essential for the impact machine to work results from tests have shown that the boost does reduce the time it takes for the counterweight to reach the desired counter phased movement. The flow is preferably a gas flow and most preferably an air flow, as this may be released freely. However, it may be possible to arrange a recirculation system so that other fluids may be used. It should be noted that there may be more than one outlet 95 and /or more than one nozzle 96, for example to change the flow rate or to direct or balance the boost. Furthermore, in an exemplary embodiment where the impact machine is electrically actuated the reversed phase movement of the counterweight may be initiated by for example an electromagnetic actuator.

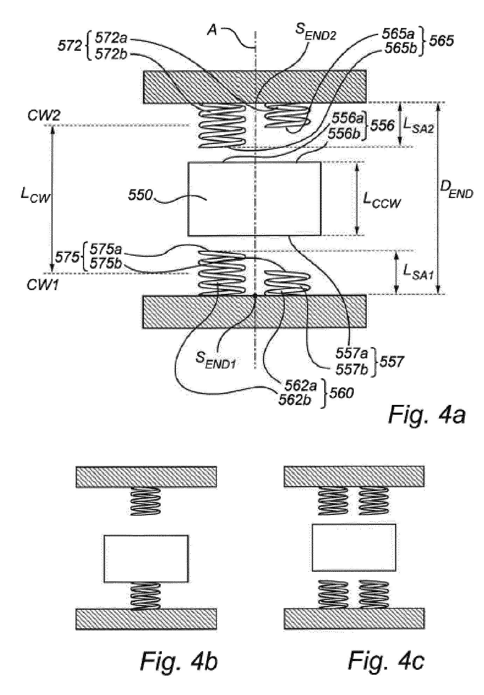

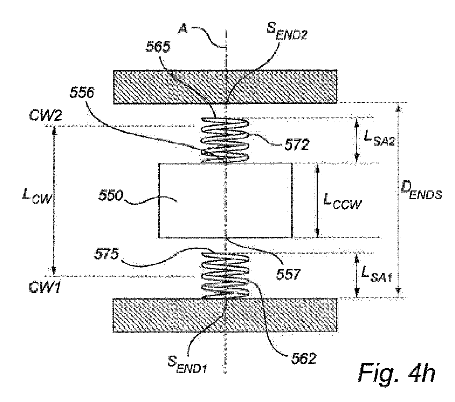

Now referring to figs. 4a-4k, which schematically illustrate other examples of possible embodiments of the present invention. In common for all embodiments according to figs. 4a-4g is that the counterweight 550 is provided with an axial length Lccw between the contact surfaces 556, 557 of the counterweight 550. Furthermore, the first spring-action arrangement 560 is limited in its axial movement by a first end surface Send1 and the second spring-action arrangement 570 is limited in its axial movement by a second end surface Send2. The first spring action arrangement 560 has an unactuated length $L_{SA1}$, and the second spring action arrangement 570 has an unactuated length $L_{SA2}$. The unactuated length for the first spring action arrangement 560 is the distance between the end surface $S_{end1}$ and the contact endpoint 565. The unactuated length for the second spring action arrangement 570 is the distance between the surfaces $S_{end2}$ and the contact endpoint 575. The distance Dend between the first $S_{end1}$ and the second end surface $S_{end2}$ is the total axial distance inside the vibration reduction arrangement. The counterweight 550 is axially moveable in a first axial direction A, between a first CW1 and a second counterweight position CW2, in which the spring-action arrangements 560, 570 are compressed. Specifically, in the embodiments illustrated in figs. 4a-4h, the length of the gap $D_1$ can be calculated as:

$$D_1 = D_{ends} - L_{ccw} - L_{SA1} - L_{SA2}$$

Fig. 4a illustrates that the first 560, and the second spring-action arrangements 570 can include a first 562a, 572a and a second spring-action member 562b, 572b arranged in parallel as pair at each counterweight position CW1, CW2. The unactuated axial length of the first spring-action member 572a, 762a can be shorter than the axial length of the second spring-action member 572b, 562b included in a pair. However, the unactuated lengths of the first 560 and the second 570 spring-action arrangements $L_{SA1}$, $L_{SA2}$ are defined by the longest spring-action member. Fig. 4b illustrates that the first 560 and the second 570 spring-action arrangements can comprise a single spring-action member. Fig. 4c illustrates that the first 560 and the second spring-action arrangements 570 may include two spring-action members of the same length and which are arranged in parallel as pair at each counterweight position.

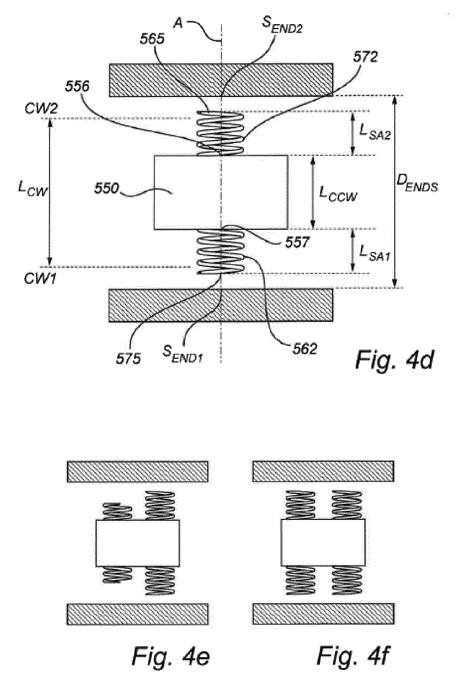

Now referring to fig. 4d, which illustrates an embodiment with spring-action arrangements are fixedly attached to the counterweight 550. However, the first $S_{end1}$ and the second end surfaces $S_{end2}$ serve as abutment surfaces in this case. Furthermore, figs. 4e and 4f show that it is also possible to modify the arrangement in fig.

4d by arranging springs in parallel with the same or with different lengths.

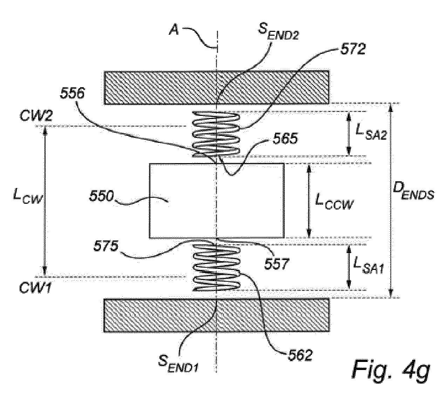

Now referring to fig. 4g, which illustrates an embodiment, in which the first 560 and the second 570 spring-action arrangements consist of loose spring-action members 562, 572 arranged on each side of the counterweight 550, such that they are only abutting the end surfaces and an the counterweight 550.

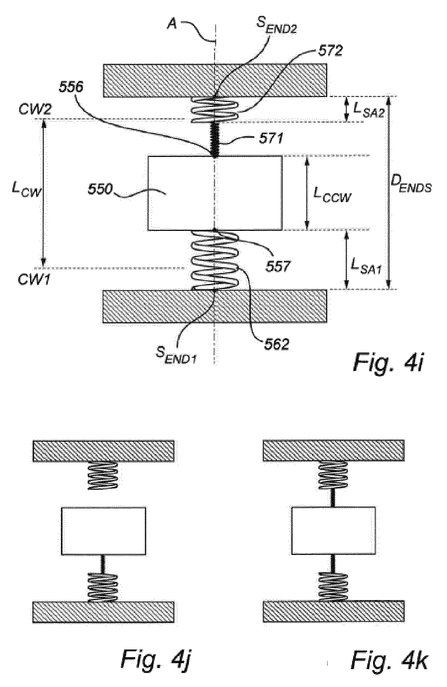

Fig. 4i illustrates an embodiment where the gap $D_1$ has been replaced by a weak spring-action member 571.

The gap $D_1$ is thus represented by the unactuated length of the weak spring-action member 571 and can be calculated from the same relationship as for the figures 4a-4g or by simply measuring the length of the weak spring action member 571 itself.

Additionally, other embodiments and variants are possible within the scope of the present invention. For instance, as illustrated in fig. 4j, another embodiment may include a combination of a gap $D_1$ and a combination of at least two spring-action members 561, 562 with different spring coefficients, connected to each other in series at a first counterweight position CW1. At the second counterweight position CW2, a single spring-action member may be arranged. The counterweight 550 is not fixedly attached to the spring-action members. Fig. 4k illustrates still another possible embodiment which comprises at least two spring-action members with different spring coefficients connected in series at each counterweight position CW1, CW2, whereby the counterweight 550 is fixedly connected to the spring-action members.

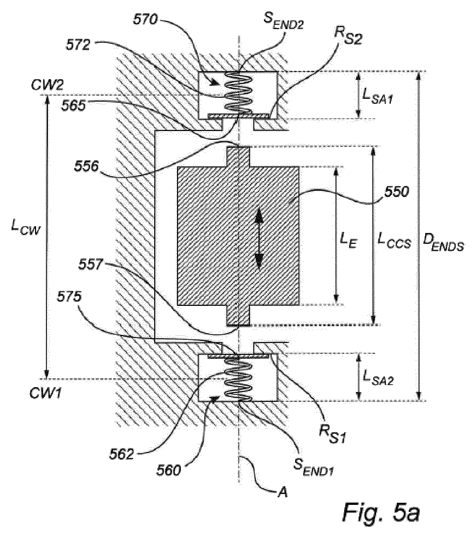

As schematically illustrated in figs. 5a-5c, other embodiments of the present invention may include biased spring-action arrangements. The length of the gap $D_1$ can be calculated from the same relationship as for the figures 4a-4g.

As illustrated in fig. 5a, a way to bias a spring-action arrangement is to retain it in a partially compressed state. The biased spring-action members 562, 572 are arranged in compartments defined by an end surface Send1, Send2 and a retaining surface $R_{s1}$, $R_{s2}$. The contact surfaces 556, 557 of the counterweight 550 may be adapted such that the axial length Lccs of the counterweight 550 between the counterweight contact surfaces 556, 557 is longer than an exterior length $L_E$ of the counterweight 550.

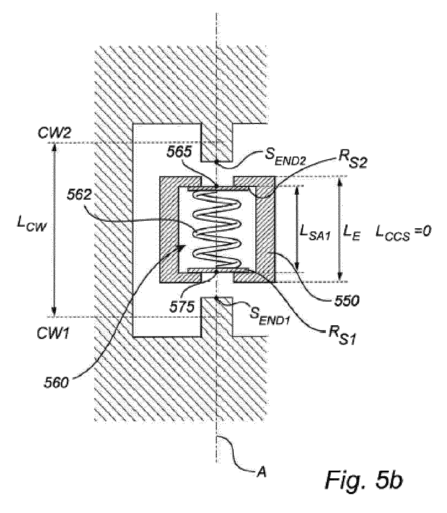

As illustrated in fig. 5b, the spring-action arrangement 560 can be built-in inside the counterweight 550. The retaining surfaces are arranged inside the counterweight 550. The end surfaces $S_{end1}$, $S_{end2}$ are provided with a protruding portion such that an abutment with the spring-action arrangement 560 is possible. The protruding portions are dimensioned such that they only contact the spring action arrangement without hindrance or contact with other parts. In this embodiment, a single spring-action member 562 may be arranged inside the counterweight 550, with an axial extension between the first $R_{SA1}$ and the second retaining surfaces $R_{SA2}$. The length of the counterweight 550 in the direction between the contact points is null.

For embodiments with built-in spring action members, the distance of the gap $D_1$ can be calculated as the distance Lcw between the first CW1 and the second counterweight position CW2 subtracted by the exterior length $L_E$ (maximum axial length) of the counterweight 550.

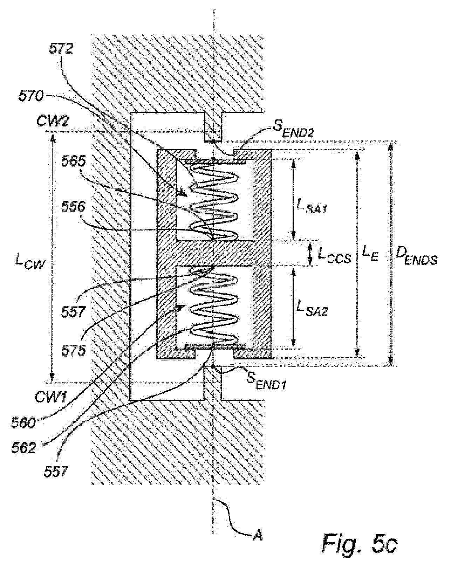

As illustrated in fig. 5c, a first 560 and a second spring-action arrangement 570 may be arranged inside the counterweight 550 and are separated by a wall inside the counterweight 550. The first 560 and the second spring-action arrangements 570 are retained by the wall inside the counterweight 550 at a first distal end and at a first retaining surfaces at the second distal end. The length of the counterweight in the direction between the contact points is null. The list of possible embodiments and modifications is non-exhaustive.

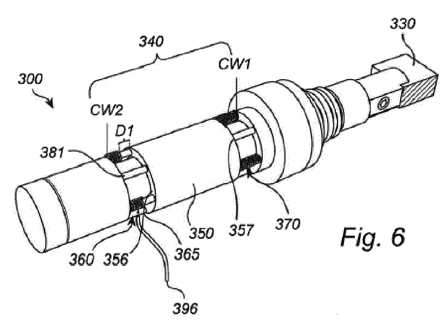

Fig. 6 shows a schematic perspective view of an impact machine according to another exemplary embodiment of the present invention. As shown in fig. 6, the counterweight 350 has a cylindrical shape and is arranged around the housing 305 of the hammering element 310. The counterweight 350 is moveable between the first counterweight position CW1 and the second counterweight position CW2 in response to the impact action of the hammering element 310. The counterweight 350 is guided between the two positions CW1 and CW2 by means of counterweight guiding means 381. In this embodiment, the guiding means 381 are internally arranged within the counterweight 350. However, other possible modifications may include external guiding means, such as an external housing, which encloses and guides the counterweight by its periphery. Motion reversing mechanisms 380, 390 are arranged at the first counterweight position CW1 and the second counterweight position CW2. In this embodiment, the motion reversing mechanisms 380, 390 comprise two coil springs arranged at each counterweight position CW1, CW2. A gap $D_1$ is arranged between a first counterweight position CW1 and the second counterweight position CW2. In particular the gap D1 is illustrated in fig. 4a as the distance between a contact surface 356 of the counterweight 350 and a contact surface 365 of the spring-action member 362.

The working principle of an impact machine, as disclosed in the appended drawings, is to apply a reoccurring force upon the hammering element 110, 210, 310 such that the hammering element 110, 210, 310 performs a periodical movement between a first HE1 and a second HE2 hammering element position. A reoccurring force on the hammering element 110, 210, 310 is achieved by actuating means 115, 215, 315. Typically, hand-held impact machines operate with hydraulic, combustion engine or electric power, while larger machine-mounted impact devices are powered with hydraulics or pneumatics. The purpose of the actuating means 115, 215, 315 is to transfer impact energy to the hammering element 110 by either electric/mechanical, hydraulic or pneumatic means such that an impact force is applied to the hammering element. An example how this may be done is to periodically supply air or hydraulic fluid to and from an expandable chamber, which in turns transfers the force to the hammering element 110, 210, 310. In the second position HE2, the hammering element 110, 210, 310 is in mechanical contact with an implement 130, 230, 330, such as a work tool, whereby the hammering element 110, 210, 310 transfers a blow force to the implement 130, 230, 330. Correspondingly, the function of the vibration reduction arrangement 140, 240, 340 is to bring the counterweight 150, 250, 350 into a counter-phased movement in relation to the hammering element 110, 210, 310, such that the vibrations from the hammering element 110, 210, 310 are counter-acted by the vibrations from the counterweight movement. The implement/work tool 130, 230, 330 may be positioned in any direction, whereby the movement of the counterweight is aligned with the hammering element. In order to bring the counterweight 150, 250, 350 into the right counter-phased movement, the travel length and the spring coefficients cause the counterweight 150, 250, 350 to move according to a particular resonance frequency. However, it may be an advantage to rapidly bring the counterweight 150, 250, 350 into the right frequency so that the reduction effect may be instantaneously created when the impact machine is turned on. This may be achieved by applying an essentially instantaneous force on the counterweight, whereby the exhaust of pressurized air or liquid from the housing 105, 205, 305 of the hammering element may be used. A first motion reversing mechanism 160, 260, 360 is located at the second counterweight position (CW2) and a second motion reversing mechanism 170, 270, 370 is located at the first counterweight position. In particular, the motion reversing mechanisms 160, 170;260, 270; 360, 370 receive and reverse the counterweight 150, 250, 350 as it moves between the first CW1 and second counterweight position CW2.

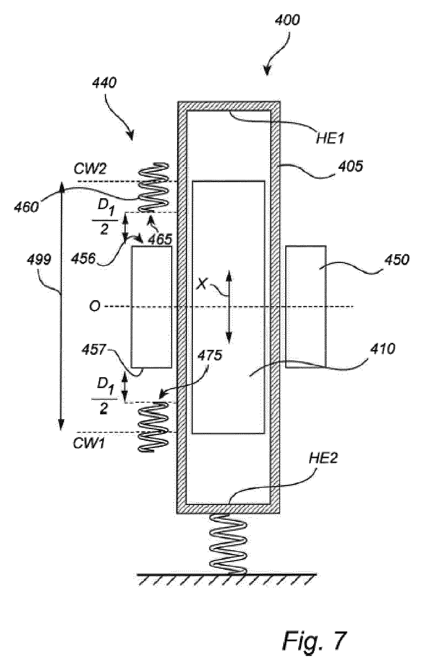

Fig. 7 shows a schematic cross-sectional view of the principle components of the impact machine and the vibration reduction arrangement according to an exemplary embodiment. A dampening arrangement comprises a cylindrical counterweight 450 which encloses the housing 405 of the hammering element 410. The vibration reduction arrangement 440 may be dimensioned based on the impact machine's typical working frequency $f_{work}$ and the related vibration amplitude $V_a$. The weight H of the hammering element 410 and the distance between the first HE1 and the second HE2 hammering element position are thus typically known parameters. In addition, the weight M of the hammering element housing 405 M is a known parameter. Further, fig. 7 may be used for exemplifying how the gap $D_1$ may be determined and for the embodiment illustrated in fig. 5. Firstly, the vibration reduction arrangement 440 is arranged such that both spring-action arrangements 460, 470 are uncompressed, thereafter the counterweight 450 is arranged mid-way between the contact surfaces 465, 475 of the respective spring-action arrangements 460, 470. In a second step, the gap $D_1$ is determined.

Notably, the gap $D_1$ corresponds to the a distance Dends between the contact surface 465 of the first spring-action arrangement 470 and a contact surface of the counterweight 456, and a second distance $D_1/2$ between a contact surface 475 of a second spring-action arrangement 470 and a second contact surface 457 of the counterweight 450. It is also provided that the first 460 and the second spring-action arrangement 470 are arranged on opposite sides of the counterweight 450. The principal concept of the vibration reduction arrangement is to counter-act the vibrations from the hammering element 410. By consequence, the maximum force $F_{HE}$ for the hammering element should therefore be essentially the same as the maximum force for the counterweight $F_{CW}$. In particular, the accelerating forces acting on the counterweight 450 and the hammering element 410 should be equal such that the counter force on the hammering element housing 405 is the same. The counterweight's 450 movement is restricted to a maximum counterweight displacement distance between a first counterweight position CW1 and a second counterweight position CW2. A movement beyond these points is thus not possible. Hence, depending on e.g. the hammering element 410 acceleration forces, the travel distance of the counterweight 450 may be at maximum travel distance, or shorter.

Hence, the distance between the first CW1 and the second counterweight position CW2 and the weight of the counterweight 410 may be varied and adapted to geometric and weight constraints of the impact machine. As in the practical example given in relation to the diagram in fig. 2, the weight of the hammering element is 0.3 kg and the weight of the counterweight is 1 kg. The total weight of the hammer element housing is 3 kg.

The next step may be to select a resonance frequency $f_{res}$ of the counterweight. Based on a predetermined/desired working frequency of the impact machine, a resonance frequency of the counterweight is selected so that it lies sufficiently far above the predetermined working frequency of the impact machine so that the dampening effect is good at the working frequency. In this particular example, based on that the normal operating frequency of the machine is 30 Hz, the resonance frequency is selected to 32 Hz. Following, based on the selected counterweight resonance frequency $f_{res}$ the spring coefficient $k$ for the counterweight may be determined from the following relationship:

$$f_{res} = \frac{b}{2D_1 + 2\pi b}\sqrt{\frac{k}{m}}$$

Where:

$m$: weight of the counterweight 300 (grams)
$f$: resonance frequency of the counterweight (Hz)
b: compressed distance of the spring(s)

In cases where there is no gap in the arrangement the coefficients are advantageously chosen by simulation.

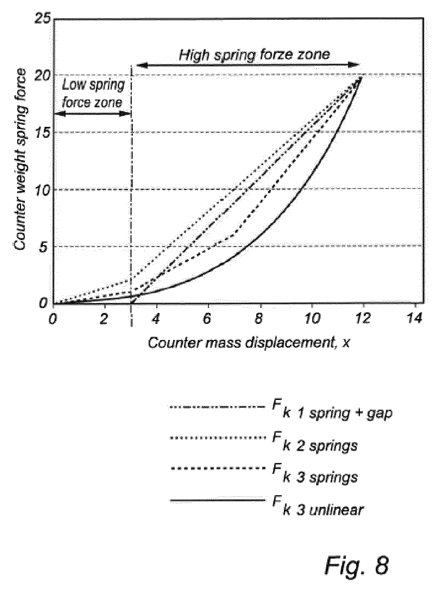

Fig. 8 illustrates a diagram with four different spring-action member embodiments, which present a non-linear spring-action force as a function of the counterweight displacement x. The inclination of the curves may be referred to as a spring coefficient k. Fig. 7 geometrically shows the counterweight displacements x in relation to an embodiment of the present invention $F_{k\ gap}$. Notably, as geometrically presented in fig 7, the starting point (at 0 mm) as illustrated in figure 5 relates to the position O, whereas the endpoint (at 12 mm) always relates to the position CW2 for all spring-action member embodiments. Moreover, the position O can be seen as when the counterweight 450 is in equilibrium, when the applied spring-action force is null.

Now referring to fig. 8, a first configuration F 2 springs comprises a counterweight in contact with two spring-action members, connected in series at one side of the counterweight in its travel direction.

A second configuration F 1 spring + Gap comprise a counterweight is in contact with one spring-action members, but where a gap is introduced in the travel path of the counterweight. In the second configuration, it should be noted that the gap is actually only half a gap $D_1/2$, which is geometrically illustrated in fig. 7. A third configuration F 3 springs relates to an embodiment of the present invention, where the counterweight is in contact with three spring-action members connected in series.

Due to the change in spring coefficient and depending on the stiffness of the spring-action members, the counterweight is being subject to two zones with a different spring coefficient: a "low spring force zone" and a "high spring force zone". The low spring-force zone corresponds to the beginning of the compression of a spring-action member, where the spring-action force on the counterweight is at its lowest level. The high spring-force zone corresponds to the end of the compression of a spring-action member, where the spring-action force on the counterweight is at its highest level. It has been realized in the context of the present invention that in order to achieve an efficient vibration reduction effect for a wide working frequency range, the length of the low spring-force zone may correspond to at least 25% of the length of the high spring-force; and the average spring coefficient in the low spring-force zone should be lower than 50% of the spring coefficient in the high spring-force zone. Another discovery from the experimental studies is that if the embodiment includes a gap, the distance of the gap may be selected to around 30% of the total travel distance between first CW1 and second counterweight position CW2.

In the relationship above, k stands for the total spring coefficient acting upon the counterweight in the "low" and "high" spring-action force. If the spring-action member is a combination of two spring-action members connected in series, then the spring coefficient for each spring-action member $k_1$ and $k_2$ should sum up to a total, i.e. an *equivalent spring coefficient* $k_{ekvl}$ according to the following equation:

$$\frac{1}{k_{ekv}} = \frac{1}{k_1} + \frac{1}{k_2}$$

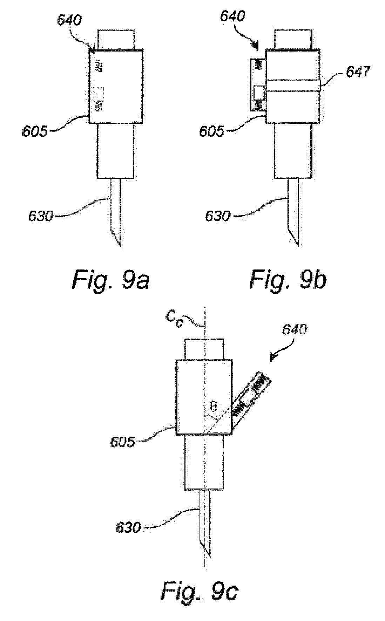

Fig. 9a to 9c illustrate different embodiments relating to the mounting of the vibration reduction arrangement. Fig 9a shows an internally mounted vibration reduction arrangement 640. In this example, the vibration reduction arrangement 640 is integrated into the impact machine and may be mounted inside a housing 605 of the impact machine. As illustrated, the vibration reduction arrangement 640 may be centered around the displacement axis of the hammering element.

Fig. 9b shows another possible embodiment, where the vibration reduction arrangement 640 is externally mounted around the housing 605 of the impact machine an attached thereto with fastening means 647. An advantage of this arrangement is that it may be used as an attachment. The vibration reduction arrangement 640 may have a symmetrical and distributed counterweight around the circumference of the housing of the impact machine.

Fig. 9c shows another possible embodiment of the present invention where the counterweight's travel direction is off-set at an angle $\theta$ in relation to the travel direction of the hammering element. This embodiment may bring advantages if there is need to reduce vibrations in both vertical and horizontal direction.

The skilled person will realize that the present invention by no means is limited to the described exemplary embodiments. The mere fact that certain measures are recited in mutually different dependent claims does not indicate that a combination of these measures cannot be used to advantage. Moreover, the expression "comprising" does not exclude other elements or steps. Other non-limiting expressions include that "a" or "an" does not exclude a plurality and that a single unit may fulfill the functions of several means. Any reference signs in the claims should not be construed as limiting the scope. Finally, while the invention has been illustrated in detail in the drawings and in the foregoing description, such illustration and description are considered to be illustrative or exemplary and not restrictive; the invention is not limited to the disclosed embodiments, but by the scope of the claims.

## Claims

**1.** An impact machine (100; 200) comprising:

- a housing (105; 205)
- a hammering element (110; 210) arranged inside said housing (105;205), said hammering element (110; 210) being displaceable between a first hammering element position (HE1) and a second hammering element position (HE2),
- an impact receiving element (130; 230) attached to said housing (105; 205),
- actuating means (115; 215) arranged to cause said hammering element (110; 210) to perform a hammering operation on said impact receiving element (130; 230),
- a vibration reduction arrangement (140; 240) attached to said housing (105;205) , which comprises:

    - a counterweight (150; 250; 350; 550) being displaceable in a first axial direction (A) between a first counterweight position (CW1) and a second counterweight position (CW2) in response to the hammering action of said hammering element (110; 210),
    - at least one motion reversing mechanism (180; 280; 380), each of said motion reversion mechanism comprising at least one spring-action arrangement (160; 260; 360; 560), each of said at least one spring-action arrangements (160; 260; 360; 560) being arranged to reverse the direction of motion of said counterweight (150; 250; 350; 550), **characterised in that**

- said counterweight (150; 350; 550) is arrangeable at a position located between said first counterweight position (CW1) and said second counterweight position (CW2) from which position said counterweight (150; 350; 550) is moveable a first distance (D1) extending in said first axial direction (A) without actuating said at least one spring-action arrangement (160; 360; 560); or wherein

- said vibration reduction arrangement (240) further comprises a first end surface ($S_{End1}$), said at least one spring action arrangement (260) being arranged between said counterweight (250) and said first end surface ($S_{End1}$), said at least one spring action arrangement (260) comprising a first spring-action member (261) attached to said counterweight (250), and a second spring-action member (272) arranged in series with said first spring-action member (261) in said first axial direction (A) and being attached to said first end surface ($S_{End1}$) and said first spring action member (261); said first spring-action member (261) having a first spring characteristics comprising a first spring coefficient ($k_1$) within the interval - $k_{trad} \leq k_1 \leq k_{trad}/2$ and $k_1 \neq 0$, and the second spring-action member (262) having a second spring characteristics comprising a second spring coefficient ($k_2$) within the interval $k_{trad}/5 \leq k_2 \leq 30*k_{trad}$, and $k_{trad}$ is determined from the following formula

$$ F_{res} = \frac{1}{2\pi}\sqrt{\frac{k_{trad}}{m}} $$

$F_{res}$ being the resonance frequency of the impact machine at rated power, and m the weight of the counterweight (250).

2. The impact machine according to claim 1, wherein said counterweight (550) is arrangeable at a position located between said first counterweight position (CW1) and said second counterweight position (CW2) from which position said counterweight (550) is moveable a first distance (D1) extending in said first axial direction (A) without actuating said at least one spring-action arrangement (160) and said at least one spring action arrangement (560) being arranged inside said counterweight (550), and said vibration reduction arrangement further comprises:

- a first end surface ($S_{End1}$) arranged adjacent to said first counterweight position (CW1) and
- a second end surface ($S_{End2}$) arranged adjacent to said second counterweight position (CW2);

said first end surface ($S_{End1}$) is arranged to receive said at least one spring action arrangement (560) when in motion towards said first counterweight position (CW1); and said second end surface ($S_{End2}$) is arranged to receive said at least one spring action arrangement when in motion towards said second counterweight position (CW1).

3. The impact machine according to claim 2, wherein said at least one spring action arrangement (560) comprises a first spring action member, which first spring action member is prestressed, said first spring action member having a first spring characteristics ($k_1$) within the interval $k_{trad}/5 \leq k_1 \leq 30* k_{trad}$.

4. The impact machine according to claim 1, wherein said counterweight (150) is arrangeable at a position located between said first counterweight position (CW1) and said second counterweight position (CW2) from which position said counterweight (150) is moveable a first distance (D1) extending in said first axial direction (A) without actuating said at least one spring-action arrangement (160) and wherein said vibration reduction arrangement (140) further comprises:

- a first end surface ($S_{End1}$) arranged adjacent to said first counterweight position (CW1), and
- a second end surface ($S_{End2}$) arranged adjacent to said second counterweight position (CW2); and

said at least one motion reversing mechanism comprises a first motion reversing mechanism and a second motion reversing mechanism, and the at least one spring action arrangement of said first motion reversing mechanism is arranged between said counterweight and said first end surface ($S_{End1}$), and the at least one spring action arrangement of said second motion reversing mechanism is arranged between said counterweight and said second end surface ($S_{End2}$),

5. The impact machine according to claim 4, wherein said first spring action arrangement is attached to said first end surface ($S_{End1}$), and said first spring action arrangement is arranged to receive said counterweight when in motion towards said first counterweight position (CW1).

6. The impact machine according to claim 4 or 5, wherein said second spring action arrangement (170) is attached to said second end surface ($S_{End1}$), and said first spring action arrangement (160) is arranged to receive said counterweight (150) when in motion towards said first counterweight position (CW1).

7. The impact machine according to claim 4 or 6, wherein said first spring action arrangement (260) is attached to said counterweight, and said first end surface is arranged to receive said first spring arrangement when said counterweight is in motion towards said first counterweight position (CW1).

8. The impact machine according to claim 4, 5 or 7, wherein said second spring action arrangement is attached to said counterweight, and said second end surface is arranged to receive said second spring arrangement when said counterweight is in motion towards said first counterweight position (CW1).

9. The impact machine according to claim 4, 6 or 8, wherein said first spring action arrangement is arrangeable at a position located between counterweight and said first end surface from which position said first spring arrangement is moveable a first distance (D1) extending in said first axial direction without actuating said first spring-action arrangement.

10. The impact machine according to claim 5, 7 or 9, wherein said second spring action arrangement is arrangeable at a position located between counterweight and said second end surface from which position said second spring arrangement is moveable a first distance (D1) extending in said first axial direction without actuating said second spring-action arrangement.

11. The impact machine according to any one of the claims 4-10, wherein said first spring action arrangement comprises a first spring action member, which first spring action member is biased, **and/or** wherein said second spring action arrangement comprises a second spring action member, which second spring action member is biased.

12. The impact machine according to claim 1, wherein said first spring-action member and a second spring-action member (272) are arranged in series or parallel in said first axial direction (A); said first spring-action member (261) having a first spring coefficient ($k_1$) within the interval - $k_{trad} \leq k_1 \leq k_{trad}/2$ and $k_1 \neq 0$, the second spring-action member (262) having a second spring coefficient ($k_2$) within the interval $2*k_{trad} \leq k_2 \leq 30$ and the second spring member is not prestressed.

13. The impact machine according to claim 1, wherein said first spring-action member and a second spring-action member (272) are arranged in series or parallel in said first axial direction (A); said first spring-action member (261) having a first spring coefficient ($k_1$) within the interval - $k_{trad} \leq k_1 \leq k_{trad}/2$ and $k_1 \neq 0$, the second spring-action member (262) having a second spring coefficient ($k_2$) within the interval $k_{trad}/5 \leq k_2 \leq 30$ and the second spring member is prestressed.

14. The impact machine according to any one of claims 2-11, wherein the spring coefficient k for the spring-action arrangement acting on the counterweight (150; 250) may be determined from the following formula with a deviation from the calculated value of less than 50%, or less than 30%, or less than 20% or less than 10%; and wherein f is the resonance frequency of the impact machine at rated power, k is the spring coefficient, m is the weight of the counterweight (150; 250), $D_1$ is said first distance and b is the compression distance of the at least one spring arrangement of said first motion reversing mechanism (160; 260):

$$f = \sqrt{\frac{k}{m} * \left(\frac{b}{2\pi b + 2D_1}\right)}$$

15. The impact machine according to anyone of claims 1-11 or 14, wherein the first distance ($D_1$) is at least 20%, or at least 40%, or at least 60% or at least 70% or at least 80% or at least 90% of the distance between the first (CW1) and the second (CW2) counterweight positions.

16. The impact machine according to anyone of claims 1, 12 or 13, wherein a first spring action member (261) and a second spring action member (262) are arranged in series or in parallel, wherein the first spring coefficient of the first spring-action member (261) is lower than the second spring coefficient of the second spring-action member (262), and wherein the first spring coefficient applies to a distance corresponding to at least 10% or at least 15% or at least 20% or at least 25% of the distance between the first CW1 and the second CW2 counterweight position; and the second spring coefficient applies to a remaining distance between the first CW1 and the second counterweight position CW2.

17. The impact machine according to claim 16, wherein the first spring coefficient is at least 50% lower than the second spring coefficient.

18. An impact machine according to anyone of the preceding claims, further comprising hammer element guiding means (120, 220, 320) arranged to cause said hammering element (110, 210, 310) to move in a linear direction between said first hammering element position (HE1) and said second hammering element position (HE2).

19. An impact machine according to anyone of the preceding claims, further comprising counterweight guiding means (381) arranged to cause said counterweight (350) to move in a linear direction between said first counterweight position (CW1) and said second counterweight position (CW2).

20. An impact machine according to any one of the preceding claims, wherein said impact receiving element (130; 230) is a work tool.

21. An impact machine according to anyone of the preceding claims, wherein said impact machine (100; 200) is handheld.

22. An impact machine according to anyone of the preceding claims 1-20, wherein said impact machine is arranged to be attached to a machine, preferably a construction machine such as an excavator, backhoe loader or skid steer loader.

23. An impact machine according to anyone of the preceding claims, wherein the weight of the hammering element H corresponds to between 20% and 300% of the weight m of the counterweight (150; 250).

**Patentansprüche**

1. Schlagmaschine (100; 200), die umfasst:

   - ein Gehäuse (105; 205),
   - ein Hammerelement (110; 210), das innerhalb des Gehäuses (105; 205) angeordnet ist, wobei das Hammerelement (110; 210) zwischen einer ersten Position (HE1) des Hammerelements und einer zweiten Position (HE2) des Hammerelements verschiebbar ist,
   - ein Schlagaufnahmeelement (130; 230), das an dem Gehäuse (105; 205) befestigt ist,
   - Betätigungsmittel (115; 215), die angeordnet sind, um zu veranlassen, dass das Hammerelement (110; 210) eine Hammeroperation auf dem Schlagaufnahmeelement (130; 230) durchführt,
   - eine Anordnung (140; 240) zur Schwingungsverminderung, die an dem Gehäuse (105; 205) befestigt ist, die umfasst:

      - ein Gegengewicht (150; 250; 350; 550), das zwischen einer ersten Gegengewichtsposition (CW1) und einer zweiten Gegengewichtsposition (CW2) als Reaktion auf die Hammerwirkung des Hammerelements (110; 210) in einer ersten axialen Richtung (A) verschiebbar ist,
      - mindestens einen Bewegungsumkehrmechanismus (180; 280; 380), wobei jeder Bewegungsumkehrmechanismus mindestens eine Federwirkungsanordnung (160; 260; 360; 560) umfasst,
      wobei jede der mindestens einen Federwirkungsanordnung (160; 260; 360; 560) angeordnet ist, um die Bewegungsrichtung des Gegengewichts (150; 250; 350; 550) umzukehren,
      **dadurch gekennzeichnet, dass**

      - das Gegengewicht (150; 350; 550) an einer Position, die zwischen der ersten Gegengewichtsposition (CW1) und der zweiten Gegengewichtsposition (CW2) liegt, angeordnet werden kann, wobei das Gegengewicht (150; 350; 550) von dieser Position aus um einen ersten Abstand (D1) beweglich ist, der sich in der ersten axialen Richtung (A) erstreckt, ohne dass dabei die mindestens eine Federwirkungsanordnung (160; 360; 560) betätigt wird,
      oder wobei
      - die Anordnung (240) zur Schwingungsverminderung ferner eine erste Endoberfläche ($S_{End1}$) umfasst, wobei die mindestens eine Federwirkungsanordnung (260) zwischen dem Gegengewicht (250) und der ersten Endoberfläche ($S_{End1}$) angeordnet ist, wobei die mindestens eine Federwirkungsanordnung (260) ein erstes Federwirkungselement (261), das an dem Gegengewicht (250) befestigt ist, und ein zweites Federwirkungselement (272) umfasst, das in Reihe mit dem ersten Federwirkungselement (261) in der ersten axialen Richtung (A) angeordnet ist und an der ersten Endoberfläche ($S_{End1}$) und an dem ersten Federwirkungselement (261) befestigt ist; wobei das erste Federwirkungselement (261) eine erste Federcharakteristik aufweist, die einen ersten Federkoeffizienten ($k_1$) innerhalb des Intervalls - $k_{trad} \leq k_1 \leq k_{trad}/2$ und $k_1 \neq 0$ umfasst, und wobei das zweite Federwirkungselement (262) eine zweite Federcharakteristik aufweist, die einen zweiten Federkoeffizienten ($k_2$) innerhalb des Intervalls $k_{trad}/5 \leq k_2 \leq 30{*}k_{trad}$ umfasst, und wobei $k_{trad}$ gemäß der folgenden Formel bestimmt wird:

$$F_{res} = \frac{1}{2\pi}\sqrt{\frac{k_{trad}}{m}}$$

wobei $F_{res}$ die Resonanzfrequenz der Schlagmaschine bei Nennleistung und m das Gewicht des Gegengewichts (250) ist.

2. Schlagmaschine nach Anspruch 1, wobei das Gegengewicht (550) an einer Position, die zwischen der ersten Gegengewichtsposition (CW1) und der zweiten Gegengewichtsposition (CW2) liegt, angeordnet werden kann, wobei das Gegengewicht (550) von dieser Position aus um einen ersten Abstand (D1) beweglich ist, der sich in der ersten axialen Richtung (A) erstreckt, ohne dass dabei die mindestens eine Federwirkungsanordnung (160) betätigt wird, und wobei die mindestens eine Federwirkungsanordnung (560) innerhalb des Gegengewichts (550) angeordnet ist und wobei die Anordnung zur Schwingungsverminderung ferner umfasst:

   - eine erste Endoberfläche ($S_{End1}$), die benachbart zu der ersten Gegengewichtsposition (CW1) angeordnet ist, und
   - eine zweite Endoberfläche ($S_{End2}$), die benachbart zu der zweiten Gegengewichtsposition (CW2) angeordnet ist;

wobei die erste Endoberfläche ($S_{End1}$) angeordnet ist, um die mindestens eine Federwirkungsanordnung (560) aufzunehmen, wenn diese in Richtung der ersten Gegengewichtsposition (CW1) in Bewegung ist; und
wobei die zweite Endoberfläche ($S_{End2}$) angeordnet ist, um die mindestens eine Federwirkungsanordnung aufzunehmen, wenn diese in Richtung der zweiten Gegengewichtsposition (CW2) in Bewegung ist.

3. Schlagmaschine nach Anspruch 2, wobei die mindestens eine Federwirkungsanordnung (560) ein erstes Federwirkungselement umfasst, wobei dieses erste Federwirkungselement vorgespannt ist, wobei das erste Federwirkungselement eine erste Federcharakteristik ($k_1$) innerhalb des Intervalls $k_{trad}/5 \leq k_1 \leq 30 \cdot k_{trad}$ aufweist.

4. Schlagmaschine nach Anspruch 1, wobei das Gegengewicht (150) an einer Position, die zwischen der ersten Gegengewichtsposition (CW1) und der zweiten Gegengewichtsposition (CW2) liegt, angeordnet werden kann, wobei das Gegengewicht (150) von dieser Position aus um einen ersten Abstand (D1) beweglich ist, der sich in der ersten axialen Richtung (A) erstreckt, ohne dass dabei die mindestens eine Federwirkungsanordnung (160) betätigt wird, und wobei die Anordnung zur Schwingungsverminderung (140) ferner umfasst:

- eine erste Endoberfläche ($S_{End1}$), die benachbart zu der ersten Gegengewichtsposition (CW1) angeordnet ist, und
- eine zweite Endoberfläche ($S_{End2}$), die benachbart zu der zweiten Gegengewichtsposition (CW2) angeordnet ist; und

wobei der mindestens eine Bewegungsumkehrmechanismus einen ersten Bewegungsumkehrmechanismus und einen zweiten Bewegungsumkehrmechanismus umfasst, und wobei die mindestens eine Federwirkungsanordnung des ersten Bewegungsumkehrmechanismus zwischen dem Gegengewicht und der ersten Endoberfläche ($S_{End1}$) angeordnet ist und die mindestens eine Federwirkungsanordnung des zweiten Bewegungsumkehrmechanismus zwischen dem Gegengewicht und der zweiten Endoberfläche ($S_{End2}$) angeordnet ist.

5. Schlagmaschine nach Anspruch 4, wobei die erste Federwirkungsanordnung an der ersten Endoberfläche ($S_{End1}$) befestigt ist und wobei die erste Federwirkungsanordnung angeordnet ist, um das Gegengewicht aufzunehmen, wenn dieses in Richtung der ersten Gegengewichtsposition (CW1) in Bewegung ist.

6. Schlagmaschine nach Anspruch 4 oder 5, wobei die zweite Federwirkungsanordnung (170) an der zweiten Endoberfläche ($S_{End2}$) befestigt ist und wobei die erste Federwirkungsanordnung (160) angeordnet ist, um das Gegengewicht (150) aufzunehmen, wenn dieses in Richtung der ersten Gegengewichtsposition (CW1) in Bewegung ist.

7. Schlagmaschine nach Anspruch 4 oder 6, wobei die erste Federwirkungsanordnung (260) an dem Gegengewicht befestigt ist und wobei die erste Endoberfläche angeordnet ist, um die erste Federanordnung aufzunehmen, wenn das Gegengewicht in Richtung der ersten Gegengewichtsposition (CW1) in Bewegung ist.

8. Schlagmaschine nach Anspruch 4, 5 oder 7, wobei die zweite Federwirkungsanordnung an dem Gegengewicht befestigt ist und wobei die zweite Endoberfläche angeordnet ist, um die zweite Federanordnung aufzunehmen, wenn das Gegengewicht in Richtung der ersten Gegengewichtsposition (CW1) in Bewegung ist.

9. Schlagmaschine nach Anspruch 4, 6 oder 8, wobei die erste Federwirkungsanordnung an einer Position, die zwischen dem Gegengewicht und der ersten Endoberfläche liegt, angeordnet werden kann, wobei die erste Federanordnung von dieser Position aus um einen ersten Abstand (D1) beweglich ist, der sich in der ersten axialen Richtung erstreckt, ohne dass dabei die erste Federwirkungsanordnung betätigt wird.

10. Schlagmaschine nach Anspruch 5, 7 oder 9, wobei die zweite Federwirkungsanordnung an einer Position, die zwischen dem Gegengewicht und der zweiten Endoberfläche liegt, angeordnet werden kann, wobei die zweite Federanordnung von dieser Position aus um einen ersten Abstand (D1) beweglich ist, der sich in der ersten axialen Richtung erstreckt, ohne dass dabei die zweite Federwirkungsanordnung betätigt wird.

11. Schlagmaschine nach einem der Ansprüche 4 bis 10, wobei die erste Federwirkungsanordnung ein erstes Federwirkungselement umfasst, wobei dieses erste Federwirkungselement vorgespannt ist, und/oder wobei die zweite Federwirkungsanordnung ein zweites Federwirkungselement umfasst, wobei dieses zweite Federwirkungselement vorgespannt ist.

12. Schlagmaschine nach Anspruch 1, wobei das erste Federwirkungselement und ein zweites Federwirkungselement (272) in Reihe oder parallel in der ersten axialen Richtung (A) angeordnet sind; wobei das erste Federwirkungselement (261) einen ersten Federkoeffizienten ($k_1$) innerhalb des Intervalls $-k_{trad} \leq k_1 \leq k_{trad}/2$ und $k_1 \neq 0$ aufweist, das zweite Federwirkungselement (262) einen zweiten Federkoeffizienten ($k_2$) innerhalb des Intervalls $2 \cdot k_{trad} \leq k_2 \leq 30$ aufweist und wobei das zweite Federwirkungselement nicht vorgespannt ist.

13. Schlagmaschine nach Anspruch 1, wobei das erste Federwirkungselement und ein zweites Federwirkungselement (272) in Reihe oder parallel in der ersten axialen Richtung (A) angeordnet sind; wobei das erste Federwirkungselement (261) einen ersten Federkoeffizienten ($k_1$) innerhalb des Intervalls - $k_{trad} \leq k_1 \leq k_{trad}/2$ und $k_1 \neq 0$ aufweist, das zweite Federwirkungselement (262) einen zweiten Federkoeffizienten ($k_2$) innerhalb des Intervalls $k_{trad}/5 \leq k_2 \leq 30$ aufweist und wobei das zweite Federwirkungselement vorgespannt ist.

14. Schlagmaschine nach einem der Ansprüche 2 bis 11, wobei der Federkoeffizient $k$ für die Federwirkungsanordnung, die auf das Gegengewicht (150; 250) wirkt, aus der folgenden Formel mit einer Abweichung von dem berechneten Wert von weniger als 50 % oder weniger als 30 % oder weniger als 20 % oder weniger als 10 % bestimmt werden kann; und wobei f die Resonanzfrequenz der Schlagmaschine bei Nennleistung ist, k der Federkoeffizient ist, m das Gewicht des Gegengewichts (150; 250) ist, $D_1$ der erste Abstand ist und b der Kompressionsweg der mindestens einen Federanordnung des ersten Bewegungsumkehrmechanismus (160; 260) ist:

$$f = \sqrt{\frac{k}{m}} * \left(\frac{b}{2\pi b + 2D_1}\right)$$

15. Schlagmaschine nach einem der Ansprüche 1 bis 11 oder 14, wobei der erste Abstand ($D_1$) mindestens 20 % oder mindestens 40 % oder mindestens 60 % oder mindestens 70 % oder mindestens 80 % oder mindestens 90 % des Abstands zwischen der ersten (CW1) und der zweiten (CW2) Gegengewichtsposition beträgt.

16. Schlagmaschine nach einem der Ansprüche 1, 12 oder 13, wobei ein erstes Federwirkungselement (261) und ein zweites Federwirkungselement (262) in Reihe oder parallel angeordnet sind, wobei der erste Federkoeffizient des ersten Federwirkungselements (261) kleiner als der zweite Federkoeffizient des zweiten Federwirkungselements (262) ist, und wobei der erste Federkoeffizient für einen Abstand gilt, der mindestens 10 % oder mindestens 15 % oder mindestens 20 % oder mindestens 25 % des Abstands zwischen der ersten CW1 und der zweiten CW2 Gegengewichtsposition entspricht; und der zweite Federkoeffizient gilt für einen verbleibenden Abstand zwischen der ersten CW1 und der zweiten Gegengewichtsposition CW2.

17. Schlagmaschine nach Anspruch 16, wobei der erste Federkoeffizient mindestens 50 % kleiner als der zweite Federkoeffizient ist.

18. Schlagmaschine nach einem der vorhergehenden Ansprüche, die ferner Führungsmittel (120, 220, 320) des Hammerelements umfasst, die angeordnet sind, um zu veranlassen, dass sich das Hammerelement (110, 210, 310) in einer geradlinigen Richtung zwischen der ersten Position (HE1) des Hammerelements und der zweiten Position (HE2) des Hammerelements bewegt.

19. Schlagmaschine nach einem der vorhergehenden Ansprüche, die ferner Führungsmittel (381) des Gegengewichts umfasst, die angeordnet sind, um zu veranlassen, dass sich das Gegengewicht (350) in einer geradlinigen Richtung zwischen der ersten Gegengewichtsposition (CW1) und der zweiten Gegengewichtsposition (CW2) bewegt.

20. Schlagmaschine nach einem der vorhergehenden Ansprüche, wobei das Schlagaufnahmeelement (130; 230) ein Arbeitswerkzeug ist.

21. Schlagmaschine nach einem der vorhergehenden Ansprüche, wobei die Schlagmaschine (100, 200) ein tragbares Handwerkzeuggerät ist.

22. Schlagmaschine nach einem der vorhergehenden Ansprüche 1 bis 20, wobei die Schlagmaschine angeordnet ist, um an einer Maschine befestigt zu werden, vorzugsweise an einer Baumaschine wie etwa an einem Bagger, Baggerlader oder an einem Kompaktlader.

23. Schlagmaschine nach einem der vorhergehenden Ansprüche, wobei das Gewicht des Hammerelements H zwischen 20 % und 300 % des Gewichts m des Gegengewichts (150; 250) entspricht.

**Revendications**

1. Machine à percussion (100 ; 200) comprenant :

- un carter (105 ; 205),
- un élément de martelage (110 ; 210) agencé à l'intérieur dudit carter (105 ; 205), ledit élément de martelage (110 ; 210) étant mobile entre une première position d'élément de martelage (HE1) et une deuxième position d'élément de martelage (HE2),
- un élément de réception de percussion (130 ; 230) fixé sur ledit carter (105 ; 205),
- des moyens de déclenchement (115 ; 215) agencés pour faire que l'élément de martelage (110 ; 210) exécute une opération de martelage sur ledit élément de réception de percussion (130 ; 230),
- un agencement de réduction des vibrations (140 ; 240) fixé sur ledit carter (105 ; 205), qui comprend :

  - un contre-poids (150 ; 250 ; 350 ; 550) mobile dans une première direction axiale (A) entre une première position de contre-poids (CW1) et une seconde position de contre-poids (CW2) en réponse à l'action de martelage dudit élément de martelage (110 ; 210),

- au moins un mécanisme d'inversion de mouvement (180 ; 280 ; 380), chacun desdits mécanismes d'inversion comprenant au moins un agencement à action de ressort (160 ; 260 ; 360 ; 560), chacun dudit au moins un agencement à action de ressort (160 ; 260 ; 360 ; 560) étant agencé pour inverser la direction de mouvement dudit contre-poids (150 ; 250 ; 350 ; 550), **caractérisé en ce que**

- ledit contre-poids (150 ; 350 ; 550) peut être agencé à une position située entre ladite première position de contre-poids (CW1) et ladite seconde position de contre-poids (CW2), depuis laquelle position ledit contre-poids (150 ; 350 ; 550) est mobile d'une première distance (D1) s'étendant dans ladite première direction axiale (A) sans déclencher ledit au moins un agencement à action de ressort (160 ; 360 ; 560) ; ou dans laquelle

- ledit agencement de réduction des vibrations (240) comprend en outre une première surface d'extrémité ($S_{End1}$), ledit au moins un agencement à action de ressort (260) étant agencé entre ledit contre-poids (250) et ladite première surface d'extrémité ($S_{End1}$), ledit au moins un agencement à action de ressort (260) comprenant un premier élément à action de ressort (261) fixé sur ledit contre-poids (250), et un deuxième élément à action de ressort (272) agencé en série avec ledit premier élément à action de ressort (261) dans ladite première direction axiale (A) et étant fixé à ladite première surface d'extrémité ($S_{End1}$) et audit premier élément à action de ressort (261) ; ledit premier élément à action de ressort (261) présentant une première caractéristique de ressort comprenant un premier coefficient de ressort ($k_1$) compris dans l'intervalle de - $k_{trad} \leq k_1 \leq k_{trad}/2$ et $k_1 \neq 0$, et le deuxième élément à action de ressort (262) présentant une seconde caractéristique de ressort comprenant un second coefficient de ressort ($k_2$) compris dans l'intervalle de $k_{trad}/5 \leq k_2 \leq 30^*k_{trad}$, et $k_{trad}$ est déterminé à partir de la formule suivante

$$F_{res} = \frac{1}{2\pi} \sqrt{\frac{k_{trad}}{m}}$$

$F_{res}$ étant la fréquence de résonance de la machine à percussion à puissance nominale et m le poids du contre-poids (250).

2. Machine à percussion selon la revendication 1, dans laquelle ledit contre-poids (550) peut être agencé à une position située entre ladite première position de contre-poids (CW1) et ladite seconde position de contre-poids (CW2), depuis laquelle position ledit contre-poids (550) est mobile d'une première distance (D1) s'étendant dans ladite première direction axiale (A) sans déclencher ledit au moins un agencement à action de ressort (160) et ledit au moins un agencement à action de ressort (560) étant agencé à l'intérieur dudit contre-poids (550), et ledit agencement de réduction des vibrations comprend en outre :

- une première surface d'extrémité ($S_{End1}$) agencée adjacente à ladite première position de contre-poids (CW1) et
- une deuxième surface d'extrémité ($S_{End2}$) agencée adjacente à ladite deuxième position de contre-poids (CW2) ;

ladite première surface d'extrémité ($S_{End1}$) est agencée pour recevoir ledit au moins un agencement à action de ressort (560) lorsqu'en mouvement en direction de ladite première position de contre-poids (CW1) ; et

ladite deuxième surface d'extrémité ($S_{End2}$) est agencée pour recevoir ledit au moins un agencement à action de ressort lorsqu'en mouvement en direction de ladite deuxième position de contre-poids (CW2).

3. Machine à percussion selon la revendication 2, dans laquelle ledit au moins un agencement à action de ressort (560) comprend un premier élément à action de ressort, lequel premier élément à action de ressort est précontraint, ledit premier élément à action de ressort présentant une première caractéristique de ressort ($k_1$) à l'intérieur de l'intervalle $k_{trad}/5 \leq k_1 \leq 30^*k_{trad}$.

4. Machine à percussion selon la revendication 1, dans laquelle ledit contre-poids (150) peut être agencé à une position située entre ladite première position de contre-poids (CW1) et ladite seconde position de contre-poids (CW2), depuis laquelle position ledit contre-poids (150) est mobile d'une première distance (D1) s'étendant dans ladite première direction axiale (A) sans déclencher ledit au moins un agencement à action de ressort (160) et dans laquelle ledit agencement de réduction des vibrations (140) comprend en outre :

- une première surface d'extrémité ($S_{End1}$) agencée adjacente à ladite première position de contre-poids (CW1), et
- une deuxième surface d'extrémité ($S_{End2}$) agencée adjacente à ladite deuxième position de contre-poids (CW2) ; et

ledit au moins un mécanisme d'inversion de mouvement comprend un premier mécanisme d'inversion de mouvement et un deuxième mécanisme d'inversion de mouvement, et l'au moins un agencement à action de ressort dudit premier mécanisme d'inversion de mouvement est agencé entre ledit contre-poids et ladite première surface d'extrémité ($S_{End1}$), et l'au moins un agencement à action de ressort dudit deuxième mécanisme d'inversion de mouvement est agencé entre ledit contre-poids et ladite deuxième surface d'extrémité ($S_{End2}$).

5. Machine de percussion selon la revendication 4, dans laquelle ledit premier agencement à action de ressort est fixé sur ladite première surface d'extrémité ($S_{End1}$), et ledit premier agencement à action de ressort est agencé pour recevoir ledit contre-poids lorsqu'en mouvement en direction de ladite première position de contre-poids (CW1).

6. Machine de percussion selon la revendication 4 ou 5, dans laquelle ledit deuxième agencement à action de ressort (170) est fixé sur ladite deuxième surface d'extrémité ($S_{End2}$), et ledit premier agencement à action de ressort (160) est agencé pour recevoir ledit contre-poids (150) lorsqu'en mouvement en direction de ladite première position de contre-poids (CW1).

7. Machine de percussion selon la revendication 4 ou 6, dans laquelle ledit premier agencement à action de ressort (260) est fixé sur ledit contre-poids, et ladite première surface d'extrémité est agencée pour recevoir ledit premier agencement de ressort lorsque ledit contre-poids est en mouvement en direction de ladite première position de contre-poids (CW1).

8. Machine de percussion selon la revendication 4, 5 ou 7, dans laquelle ledit deuxième agencement à action de ressort est fixé sur ledit contre-poids, et ladite deuxième surface est agencée pour recevoir ledit deuxième agencement de ressort lorsque ledit contre-poids est en mouvement en direction de ladite première position de contre-poids (CW1).

9. Machine de percussion selon la revendication 4, 6 ou 8, dans laquelle ledit premier agencement à action de ressort peut être agencé à une position située entre le contre-poids et ladite première surface d'extrémité, depuis laquelle position ledit premier agencement à action de ressort est mobile d'une première distance (D1) s'étendant dans ladite première direction axiale sans déclencher ledit premier agencement à action de ressort.

10. Machine de percussion selon la revendication 5, 7 ou 9, dans laquelle ledit deuxième agencement à action de ressort peut être agencé à une position située entre le contre-poids et ladite deuxième surface d'extrémité, depuis laquelle position ledit deuxième agencement à action de ressort est mobile d'une première distance (D1) s'étendant dans ladite première direction axiale sans déclencher ledit deuxième agencement à action de ressort.

11. Machine à percussion selon l'une quelconque des revendications 4 à 10, dans laquelle ledit premier agencement à action de ressort comprend un premier élément à action de ressort, lequel premier élément à action de ressort est décalé, et/ou dans laquelle ledit deuxième agencement à action de ressort comprend un deuxième élément à action de ressort, lequel deuxième élément à action de ressort est décalé.

12. Machine à percussion selon la revendication 1, dans laquelle ledit premier élément à action de ressort et un deuxième élément à action de ressort (272) sont agencés en série ou en parallèle dans ladite première direction axiale (A) ; ledit premier élément à action de ressort (261) présentant un premier coefficient de ressort ($k_1$) compris dans l'intervalle de $-k_{trad} \leq k_1 \leq k_{trad}/2$ et $k_1 \neq 0$, le deuxième élément à action de ressort (262) présentant un second coefficient de ressort ($k_2$) compris dans l'intervalle de $k_{trad}/5 \leq k_2 \leq 30$, et le deuxième élément de ressort n'est pas précontraint.

13. Machine à percussion selon la revendication 1, dans laquelle ledit premier élément à action de ressort et un deuxième élément à action de ressort (272) sont agencés en série ou en parallèle dans ladite première direction axiale (A) ; ledit premier élément à action de ressort (261) présentant un premier coefficient de ressort ($k_1$) compris dans l'intervalle de $-k_{trad} \leq k_1 \leq k_{trad}/2$ et $k_1 \leq 0$, le deuxième élément à action de ressort (262) présentant un second coefficient de ressort ($k_2$) compris dans l'intervalle de $k_{trad}/5 \leq k_2 \leq 30$, et le deuxième élément de ressort est précontraint.

14. Machine à percussion selon l'une quelconque des revendications 2 à 11, dans laquelle le coefficient de ressort $k$ pour l'agencement à action de ressort agissant sur le contre-poids (150 ; 250) peut être déterminé à partir de la formule suivante avec un écart de la valeur calculée de moins de 50 %, ou de moins de 30 %, ou de moins de 20 % ou de moins de 10 %, et dans laquelle f est la fréquence de résonance de la machine à percussion à puissance nominale, k est le coefficient de ressort, m le poids du contre-

poids (150 ; 250), $D_1$ est ladite première distance et b est la distance de compression de l'au moins un agencement de ressort dudit premier mécanisme d'inversion de mouvement (160 ; 260) :

$$f = \sqrt{\frac{k}{m}} * \left( \frac{b}{2\pi b + 2D_1} \right)$$

15. Machine à percussion selon l'une quelconque des revendications 1 - 11 ou 14, dans laquelle la première distance (D1) est d'au moins 20 % ou d'au moins 40 %, ou d'au moins 60 % ou d'au moins 70 % ou d'au moins 80 % ou d'au moins 90 % de la distance entre les première (CW1) et deuxième (CW2) positions de contre-poids.

16. Machine à percussion selon l'une quelconque des revendications 1, 12 ou 13, dans laquelle un premier élément à action de ressort (261) et un deuxième élément à action de ressort (262) sont agencés en série ou en parallèle, dans lequel le premier coefficient de ressort du premier élément à action de ressort (261) est inférieur au deuxième coefficient de ressort du deuxième élément à action de ressort (262), et dans laquelle le premier coefficient de ressort s'applique sur une distance correspondant à au moins 10 % ou à au moins 15 % ou à au moins 20 % ou à au moins 25 % de la distance entre les première (CW1) et deuxième (CW2) positions de contre-poids ; et le deuxième coefficient de ressort s'applique sur une distance restante entre les première (CW1) et deuxième (CW2) positions de contre-poids.

17. Machine à percussion selon la revendication 16, dans laquelle le premier coefficient de ressort est au moins 50 % inférieur au deuxième coefficient de ressort.

18. Machine à percussion selon l'une quelconque des revendications précédentes, comprenant en outre un moyen de guidage d'élément de marteau (120, 220, 320) agencé pour faire se déplacer ledit élément de martelage (110, 210, 310) dans une direction linéaire entre ladite première position d'élément de martelage (HE1) et ladite deuxième position d'élément de martelage (HE2).

19. Machine à percussion selon l'une quelconque des revendications précédentes, comprenant en outre un moyen de guidage de contre-poids (381) agencé pour faire se déplacer ledit contre-poids (350) dans une direction linéaire entre lesdites première (CW1) et deuxième (CW2) positions de contre-poids.

20. Machine à percussion selon l'une quelconque des revendications précédentes, dans laquelle ledit élément de réception de percussion (130 ; 230) est un outil de travail.

21. Machine à percussion selon l'une quelconque des revendications précédentes, dans laquelle ladite machine à percussion (100 ; 200) est manuelle.

22. Machine à percussion selon l'une quelconque des revendications précédentes 1 -20, dans laquelle ladite machine à percussion est agencée pour être fixée sur une machine, de préférence une machine de construction telle qu'une excavatrice, une rétrocaveuse ou une chargeuse à direction à glissement.

23. Machine à percussion selon l'une quelconque des revendications précédentes, dans laquelle le poids de l'élément de martelage H correspond à environ entre 20 % et 300 % du poids m du contre-poids (150 ; 250).

Fig. 1a

Fig. 1b

Fig. 2a

Fig. 2b

Fig. 3a

Fig. 3b

Fig. 4a

Fig. 4b

Fig. 4c

Fig. 4d

Fig. 4e          Fig. 4f

Fig. 4g

Fig. 4h

Fig. 4i

Fig. 4j

Fig. 4k

Fig. 5a

Fig. 5b

Fig. 5c

Fig. 6

Fig. 7

Fig. 8

EP 2 931 481 B1

Fig. 9a          Fig. 9b

Fig. 9c

40

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120279741 A1
- US 20120279741 A
- DE 102009046348

**Non-patent literature cited in the description**

- **J. P. DEN HARTOG.** *Mechanical Vibratons,* 1985
- *Shock and Vibraton Handbook,* 1987